Europäisches Patentamt

European Patent Office

Office européen des brevets

(11) Publication number: **0 108 471**
**B1**

# EUROPEAN PATENT SPECIFICATION

(45) Date of publication of patent specification: **25.04.90**

(51) Int. Cl.⁵: **G 09 G 1/28, H 04 N 9/16**

(21) Application number: **83304476.1**

(22) Date of filing: **03.08.83**

(54) **Apparatus and method for colour tracking and brightness correction in a multi-gun colour cathode ray tube display.**

(30) Priority: **12.10.82 US 433934**

(43) Date of publication of application:
**16.05.84 Bulletin 84/20**

(45) Publication of the grant of the patent:
**25.04.90 Bulletin 90/17**

(84) Designated Contracting States:
**DE FR GB IT**

(56) References cited:
**GB-A-2 043 394**
**US-A-4 340 904**

(73) Proprietor: **HONEYWELL INC.**
**Honeywell Plaza**
**Minneapolis MN 55408 (US)**

(72) Inventor: **Mick, Perry Joseph**
**1048 Continental Way Apartment 31**
**Belmont California 94002 (US)**

(74) Representative: **Singleton, Jeffrey et al**
**ERIC POTTER & CLARKSON 27 South Street**
**Reading Berkshire, RG1 4QU (GB)**

Courier Press, Leamington Spa, England.

## Description

The present invention relates generally to colour cathode ray tube (CRT) display appartus and method.

In most prior art colour CRT display systems employing a multi-gun CRT such as, for example, home and commercial television receivers, where normal viewing ambient light conditions do not vary significantly, essentially fixed predetermined drive voltages for the red, green and blue cathodes are used. Thus, any change in the manual brightness setting will cause only a DC shift while maintaining the same relative voltages applied to the CRT. However, since the colour gun response is a nonlinear function of the applied DC cathode voltage, the relative colour balance of a multi-gun structure is disturbed. Thus, to restore the proper colour balance, compensating readjustments of the drive to the red, green and blue guns individually are necessary. In the applications just described, since the adjustments are normally made over relatively narrow ranges of ambient light conditions, the colour shift is slight and generally not corrected. Similarly, the automatic brightness function found on commercial television receivers affects the drive of all three guns in identically the same manner and has no feature to compensate the relative shift in colour balance but again, the restricted operating range keeps the error from being objectionable. However, these conventional colour CRT brightness controls, whether automatic, manual, or both, are unsuitable for critical applications of colour CRTs such as where used to display information in an aircraft cockpit environment, wherein the ambient light level may vary uncontrollably over wide ranges, requiring readjustment of the display brightness over a wide range.

Convenitonally, a multi-gun CRT, such as the shadow-mask type, includes red, green and blue cathodes for emitting the three electron beams which excite the corresponding red, green and blue phosphor triads through the screen apertures, the output light intensity of each phosphor, in Foot-Lamberts, varying in accordance with the spectral response of any filter on the screen, and non-linearly in accordance with the voltage applied to each cathode in a determinable manner, such ratio being a function of a brightness factor known as gamma ($\gamma$) for each primary colour, and which may be a variable from tube to tube as well as colour to colour.

Therefore, in order to maintain a given colour hue or chromaticity over the entire colour spectrum and brightness range, the relative intensity of each primary colour component must be varied in accordance with its particular gamma characteristic. In addition it has been found necessary to modify each colour hue component in accordance with the square of the video driving voltage to provide colour tracking.

One example of an automatic colour correction and brightness tracking device is found in European Patent Specification No. 0,076,076 which discloses apparatus for automatically sensing and correcting for ambient brightness levels and display writing modes, for calculating the corresponding brightness level required for each of the primary colour components of a commanded colour, and for determining the required drive voltages to the cathode ray tube cathodes. These operations require a relatively sophisticated microprocessor control system and an associated personality programmable-read-only-memory (PROM) containing the colour-brightness characteristics of the particular cathode ray tube to which it is dedicated. While capable of a wide range of brightness to colour tracking correction, relativley complex circuitry is required for mathematical computations control, and storage. The complexity of this prior art apparatus was necessitated in part by the need to operate and perform the gamma and contrast corrections at a video pulse rate in the megaHertz range.

US—A—4,340,904 discloses an apparatus for achieving and maintaining grey scale tracking in a multibeam cathode ray display device, despite fluctuations in the electrical characteristics of the display device and of video amplifiers driving the device, this apparatus being less complex than that of EP—A—0,076,076.

The present invention is defined in the appended claims and performs the function of correcting for the colour gun non-linearity while keeping cost and complexity to a minimum by avoiding the need to perform non-linear corrections and mathematical computations at video speeds, thus permitting relatively simple operational amplifiers for an analogue system, and permitting relatively simple analogue-to-digital and digital-to-analogue converters and storage for a digital correction control system. A hybrid system comprised of analogue colour selection and digital colour correction is also within the scope of the present invention.

The present invention overcomes the disadvantages of the prior art by requiring neither a program-controlled microprocessor nor colour correction at video rates. Since it is recognised that the brightness and colour tracking parameters are essentially constant for a given colour gun, and the reference brightness level is varied at infrequent intervals, simple analogue or digital storage techniques may be used to apply a colour correction factor to the cathode energisation driving voltage.

Thus, one embodiment of the present invention comprises a cathode ray tube with at least two colour guns, a reference display brightness control for setting variable brightness energisation levels, a video colour decoder for commanding the pre-determined colour components of the primary colours at their required relative brightness levels, an analogue amplifier which applies a correction factor proportional to the required brightness signal, and a linear amplifier having a variable gain responsive to the relative brightness commanded by the colour decoder, such that a colour gun cathode is energised in proportion to the predetermined brightness corresponding to the image and predetermined colour display providing a colour correction for the phosphor emissivity response and colour tracking between guns, as brightness reference level is varied.

Several embodiments of the present invention will now be described in greater detail, by way of example, with reference to the accompanying drawings, in which:—

Figure 1 is a block diagram of a preferred embdoiment of the invention showing the electrical components thereof and their interconnections and interface with the material colour command system,

Figures 2a and 2b together form a composite block and schematic diagram showing an analogue brightness and colour tracking correction amplifier and variable gain colour selection video amplifier as employed in the embodiment of Figure 1,

Figure 3 is a characteristic gain curve showing typical output versus input voltage response for a logarithmic amplifier as used in the block diagram of Figure 2,

Figure 4 is a characteristic gain curve showing the voltage response of an anti-logarithmic amplifier as used in the block diagram of Figure 2,

Figure 5 is a table showing typical selected resistor values for determining video amplifier gain for colour selection and analogue brightness and colour tracking correction system of Figure 2,

Figures 6a and 6b together from a diagram showing a second embodiment of the invention, using a brightness and colour tracking correction system of the digital type,

Figure 7 is a table listing sample brightness and colour tracking PROM memory data, as used in the digital system,

Figure 8 is a table listing colour select PROM data for the digital embodiment of Figure 6,

Figure 9 is a curve of brightness output as a function of cathode energisation for the three colour guns of a colour CRT, using raster display,

Figure 10 is similar to Figure 9, except for a stroke display,

Figures 11a and 11b together form a diagram showing a hybrid embodiment of the invention, using digital brightness and colour tracking correction and analogue colour selection, and

Figure 12 is a table showing typical selected ersistor values for determining video amplifier gain for colour selection in a hybrid digitalanalogue colour selection and brightness tracking correction system.

A typical electronic flight instrument system for an aircraft usually comprises two basic units; a display unit mounted in the aircraft cockpit and a symbol generator unit normally mounted in the aircraft's electronics bay, the former displaying the flight control, flight navigation, and annunication or status information generated by the symbol generator. Multiple identical display units may be employed, each displaying the desired flight data, such as a primary flight display (attitude, flight director etc.) and a navigation display (map, weather, radar, etc.) which may be driven by a single symbol generator. Multiple display units (pilot's and copilot's instruments) may also be driven by dual symbol generators, suitable switching control panels being provided for any desired manual and/or automatic cross switching between symbol generators and display units. The present invention is applicable, in general, to any colour CRT subjected to wide ranges of ambient light conditions. The display unit of such an overall system is the subject of the present invention. More specifically, since a CRT colour gun must be corrected for the nonlinearity of its brightness output with respect to changes in driving energisation, as well as individual production differences between colour guns of a single tube or production units of individual display systems, and for colour tracking with change in brightness, the apparatus of the present invention adapts the pilot's selected brightness of each display unit to such conditions.

In a colour cathode ray tube of the type used for a display apparatus, a multiplicity of different but predetermined colours must be provided. Each colour produced on the face of the cathode ray tube is composed of one, two, or three components of the primary colours red, green and blue, with each of the colours being predetermined by the relative intensity of each of its primary components. These relative intensities may also take into consideration the variances in brightness perception of the human eye when perceiving different colours in the visible spectrum. When operated under a wide range of ambient light conditions, such as in an aircraft cockpit, provision must be made for varying the average brightness of the display, as well as of the individual primary colour components. The light output of a particular colour phosphor has a unique non-linear brightness versus cathode voltage characteristic, such characteristic varying from gun-to-gun and from tube-to-tube. Further, in order that the colours track, that is maintain a constant hue as the average brightness level is changed, it is desirable that the brightness output of each individual cathode be proportional to the square of the applied reference voltage.

The present invention is a brightness correction system for the video colour guns of a colour cathode ray tube, as in the shadow mask type, for example. The video drive voltage to each gun of the CRT is altered non-linearly to take into account an exponential gamma factor, peculiar to each gun, and such that each colour gun has a brightness output proportional to the square of an input brightness reference voltage. While colour selection is performed at video speeds, the actual non-linearity correction does not have to operate at video speeds since it follows the reference brightness level, typically from a manual control. The present invention permits colours to track over the entire brightness range, and individual colour gun gain adjustment assures that all colours will be the same among all display units.

Three embodiments are disclosed, including (1) an analogue system using logarithmic gain characteristic amplifiers for brightness and colour tracking correction and variable gain linear operational amplifiers for colour selection, (2) a digital system in which the gamma correction, squaring correction, and colour selection data are stored in memory, requiring digital-to-analogue and analogue-to-digital circuitry, and (3) a hybrid system with digital brightness and tracking correction and analogue colour selection. The digital system and corresponding digital elements of the hybrid system improve on the prior art by treating the brightness reference level as an essentially DC value, thereby allowing all mathematical corrections to be predetermined, which avoids the need for microprocessor control and dynamic mathematical computations at video frequency, which require more complex and faster responding circuitry. A colour tracking and brightness correction control apparatus embodying the principles of the present invention comprises a colour cathode ray tube with a screen for emitting images as a plurality of colours as determined by the cathode energisation applied to each colour gun, a reference brightness control, a colour correction circuit energised by the brightness control with an output proportional to the exponential factor $2/\gamma$, where the correction may be performed by nonlinear amplification of the reference brightness signal, and operable at substantially less than video rates, a digital decoder responsive to digital input colour selection signals operating at a video rate, and a variable gain linear amplifier circuit, coupled to the decoder through an array of resistors, controlled by the decoder, so as to vary the gain of the linear amplifier circuit in a manner calculated to provide the correct relative brightness of each colour gun for any selected hue over the full range of CRT brightness. Preparatory to the operation of the apparatus, each non-linear amplifier is adjusted for a gain factor corresponding to the gamma factor of its associated colour gun, which normalises gun-to-gun differences in phoshor response. Alternatively, the required gain corrections may be stored in a digital memory for recall in response to the setting of the reference brightness control level. Thus, the overall brightness level of the display will be determined by the reference brightness control level, with predetermined non-linear correction factors.

A second input to the CRT is a video rate colour selection signal, operating, for example at 6—12 Mhz. This signal will change the cathode energisation relative to the corrected reference brightness level so as to maintain the selected hues in the display. In the analogue system, a variable gain ampilfier for each gun is coupled to a preselected array of gain control resistors, selected to maintain the correct relative brightnesses between primary colours for preselected colours from a group selected for raster or stroke display, and responsive to colour command through the colour decoder. The overall system gain of each amplifier is preadjusted to correct the CRT gun-to-gun differences. In the digital embodiment, the colour command addresses a digital memory storing therein, the binary words corresponding to the desired relative brightness levels for each colour gun and hue. The selected binary word is converted to an analogue value and combined with the brightness and colour correction reference level to determine the cathode driving energisation.

Thus, the cathode voltage is modulated by two inputs: the corrected reference brightness level and the colour selection signal. The gains of the nonlinear and linear amplifier stages, in the analogue embodiment, and any corresponding digital correction circuits in its digital embodiment, are calculated to provide a brightness level which maintains the correct relative brightness between guns, thus determining correct colour tracking as a function of variable brightness and hue.

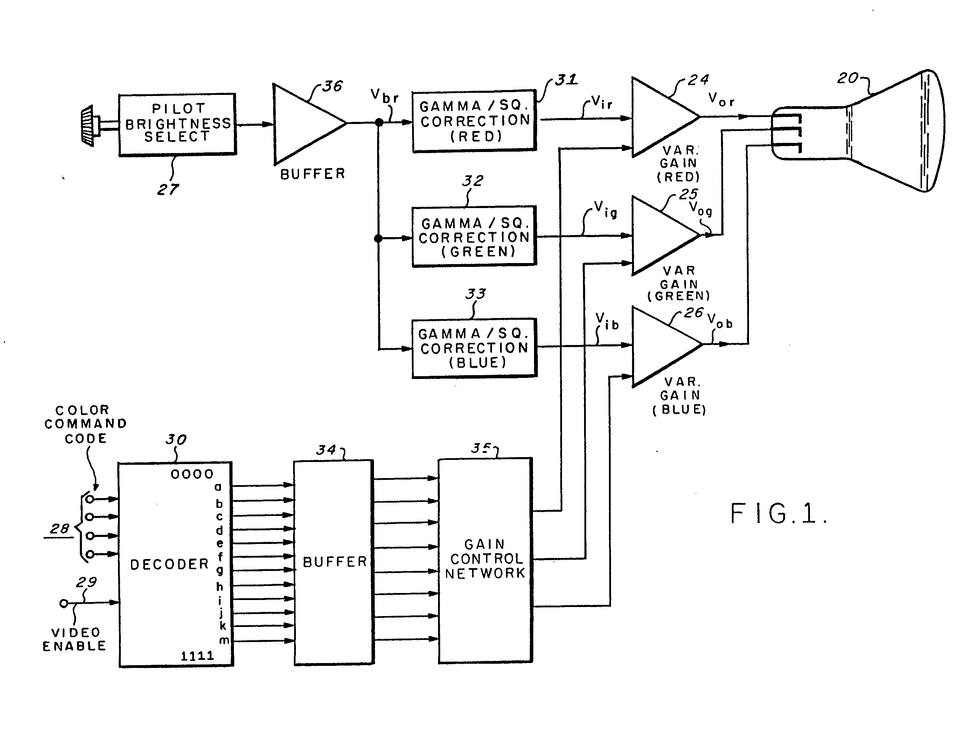

Figure 1 illustrates those portions of the display unit pertinent to the colour brightness tracing apparatus of the present invention. It will be appreciated that in the interest of clarity and brevity related but conventional CRT apparatus such as deflection coils and their associated electronics, focus controls, convergence assembly and controls, power supplies and the like have been omitted. Conventionally, a shadow-mask type CRT 20 includes a red, green and blue cathode for emitting the three electron beams which excite the corresponding red, green and blue phosphor triads through the screen apertures, the filtered output light intensity of each phosphor, in Foot-Lamberts, varying in accordance with the voltage applied to each cathode in a determinable manner, such ratio being referred to as the gamma ($\gamma$) for each primary colour and which may vary from tube-to-tube and gun-to-gun. The red, green and blue cathode drive voltages are supplied from corresponding variable gain video amplifiers 24, 25 and 26.

To provide tracking for maintaining colour balance between the colour guns as brightness is varied, it has been found that if the brightness output of the CRT for each cathode is made proportional to the square of the control brightness voltage colour, tracking correction will be accomplished over the full range of brightness from blanked display to maximum brightness. Correction of the gamma characteristic may be accomplished along with tracking correction by selection of an appropriate factor of proportionality by which the reference brightness control signal is modified.

Addressing Figure 1, the basic video drive command 28 and 29 is applied from a digital symbol generator, not shown, to a digital colour command decoder 30. A typical digital format for the video command from the symbol generator is a four bit binary word 28 which can provide for sixteen different colours (including video blanking as black). An additional bit 29 is used to "enable" the decoder. The video command is used to address the red, green and blue variable gain video amplifiers 24, 25 and 26 via decoder output lines a to m, the details of which will be discussed below, the digital outputs of the decoder 30 being converted to analogue red, green and blue cathode drive voltages to produce the desired or commanded colour and intensity of the symbols drawn on the tube face by the deflection system.

The present invention is applicable both to display systems wherein the symbol generator drives two or more separate display units or only one display unit. It is also applicable to display systems involving one or more displays which are all raster written or all stroke written or both raster and stroke written. Thus, the video command signal illustrated in Figure 1 may be a stroke or raster command signal.

In accordance with the teachings of the present invention, the display unit of Figure 1 furtehr includes brightness and tracking correction circuits 31, 32 and 33, unique to the display unit's specific CRT guns, and adapts the displayed symbology or information to the pilot at the brightness level he has manually selected, and thereafter adjusts the individual colour cathode drives to maintain the originally commanded colour over the entire selected brightness range. The brightness correction circuits 31, 32 and 33 adjust the tube's output brightness versus cathode drive voltage characteristic for each colour phosphor while the variable gain circuits 24, 25 and 26, in cooperation with the decoder 30, a buffer 34, and a gain control network 35, adjust the colour intensity factors for each selected colour.

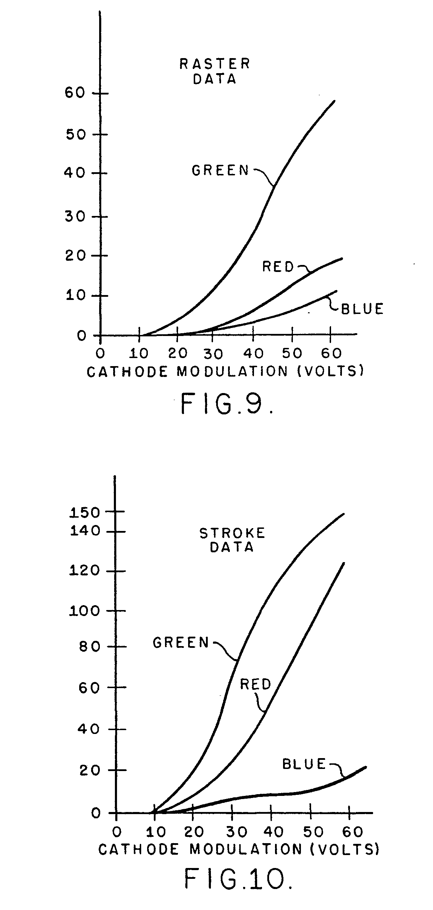

The display system is calibrated by measuring the brightness output, including any filters, of each of its primary colour phosphors for a plurality of cathode voltages applied to the corresponding colour cathode and if the symbology is to be stroke and raster written, separate measurements must be made for each writing technique. Conventional optical equipment may be used for this purpose and on a production basis the curve plotting may be automatic. The result of such measurements of a typical CRT is illustrated in Figures 9 and 10. Note that stroke written symbology is much brighter than raster written symbology for the same cathode voltages. This is due to the much slower beam deflection rates required to draw stroke written symbols than that required to draw raster written sybmols.

The brightness versus cathode drive voltage curves are analysed and a number of points on each curve are selected, each of which represents the specific drive voltage required to produce a corresponding symbol, colour and brightness. Since the human eye responds logarithmically, the selected points should be distributed logarithmically, that is, the points along the brightness axis should be closer together at low brightness and spread out at higher brightnesses in exponential fashion.

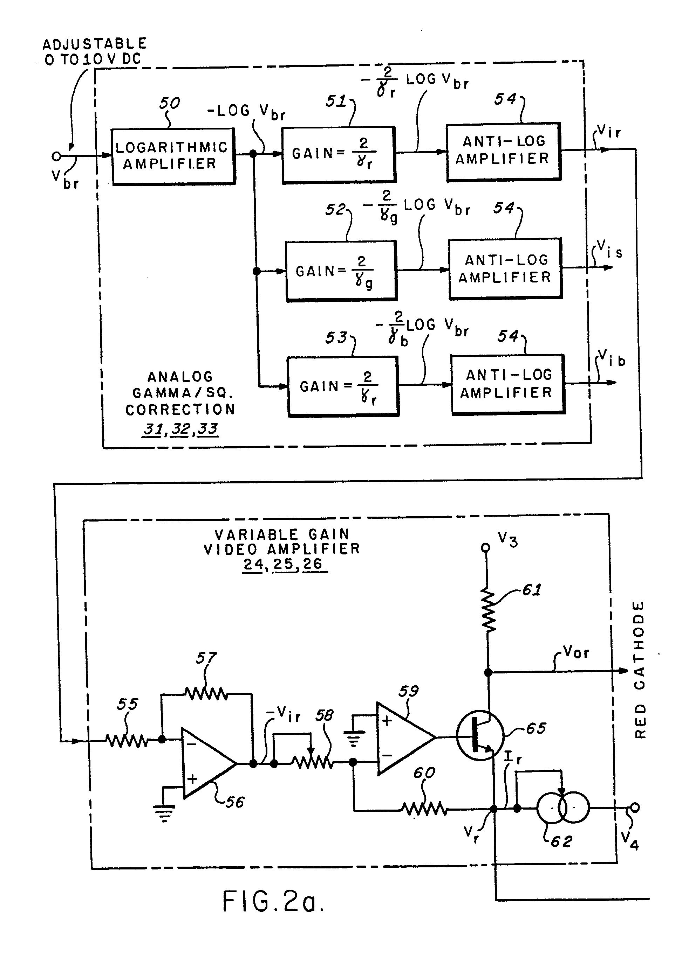

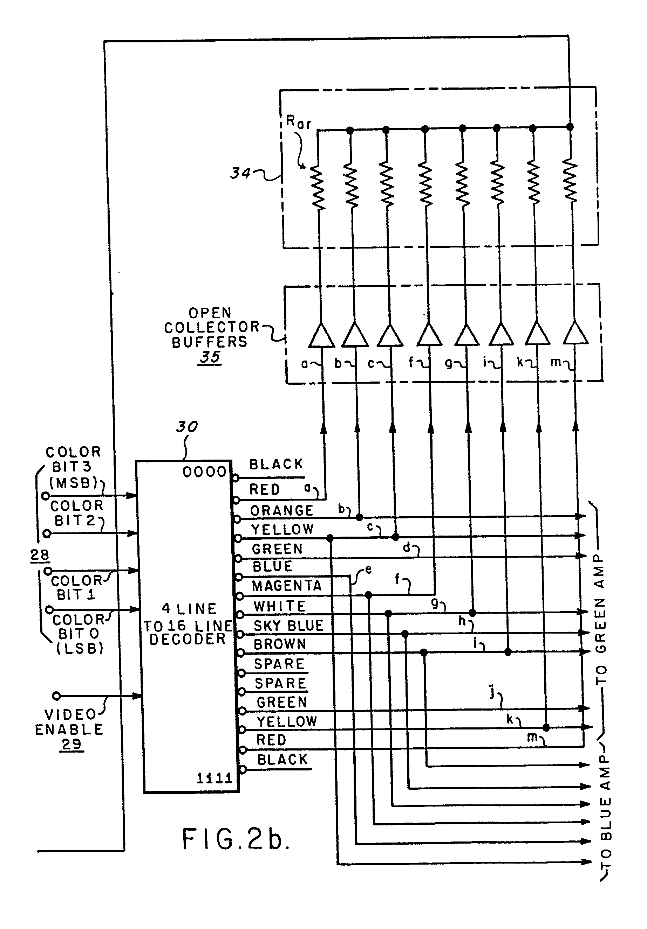

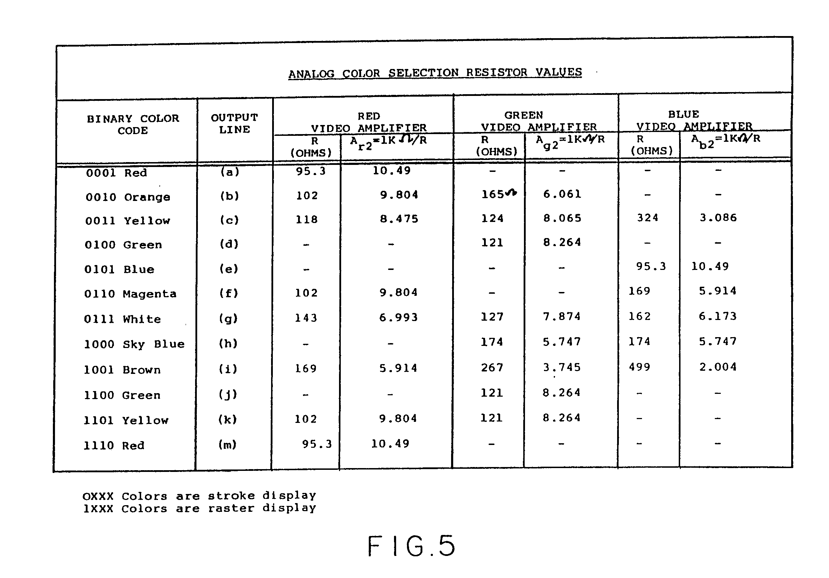

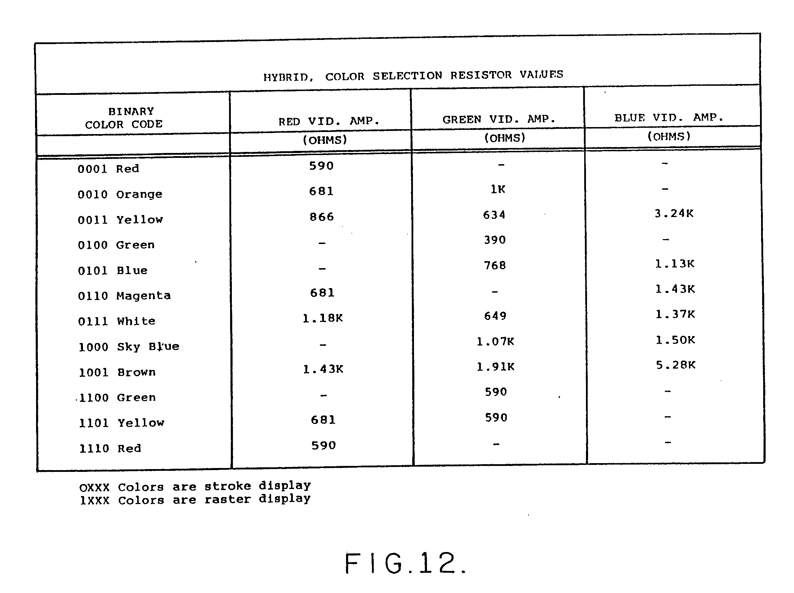

After all curve points have been established, the characteristic curve for each cathode primary colour is mathematically determined by fitting the data points to the equation: Brightness=Drive Voltage raised to the exponential gamma ($B=KV^\gamma$). This determines a fixed number for gamma that can be used to adjust a gain circuit in the analogue embodiment, as will be explained later. The curves of Figures 9 and 10 are not tracked exactly by the relationship just defined, since the exponential gamma charges slightly as drive voltage is increased. The digital embodiment of the gamma-square correction can take this into account, as will be shown below, to provide a more precise fit to the experimental values. The gains corresponding to cathode drive voltages for all three primary colour components for all commandable colours for both stroke and raster writing modes are then assembled in colour/gain tables, as in Figure 5 for an analogue embodiment. Since the input of each ampilfier 24, 25 and 26 of Figure 1 is derived from an adjustable brightness reference voltage, modified by a factor proportional to the brightness-out-to-cathode voltage characteristic of the CRT gun, and by a gain factor proportional to the colour selected, the overall cathode voltage is a function of both the gamma-square correction factor and the input video colour command. The individual colour command amplifier gains are obtained by appropriate selection of a gain determining resistor, also shown in Figure 5, for the analogue colour and brightness correction system of Figure 2. These values are independent of tube-to-tube differences. Figure 12 shows a corresponding table for a hybrid digitally controlled colour selection system.

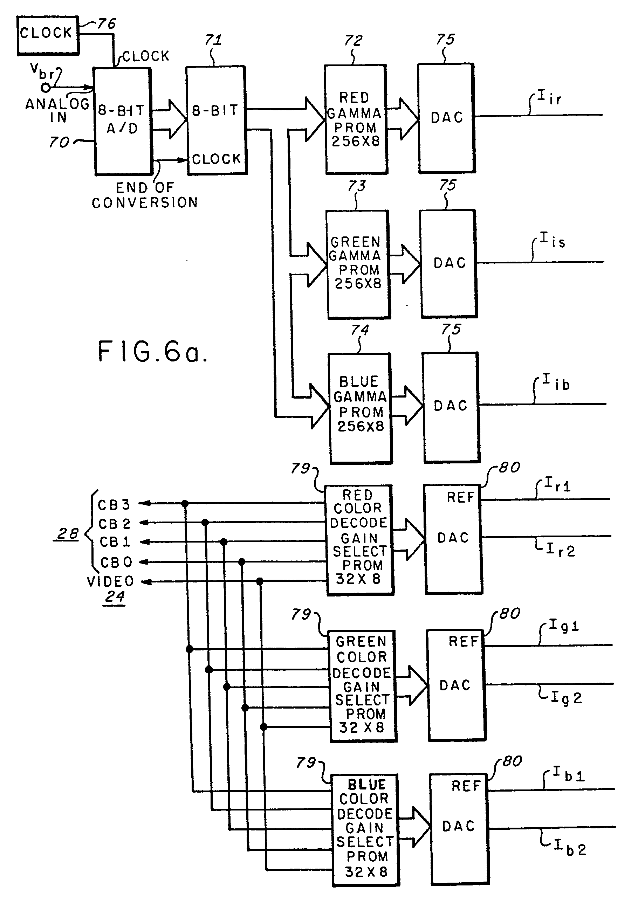

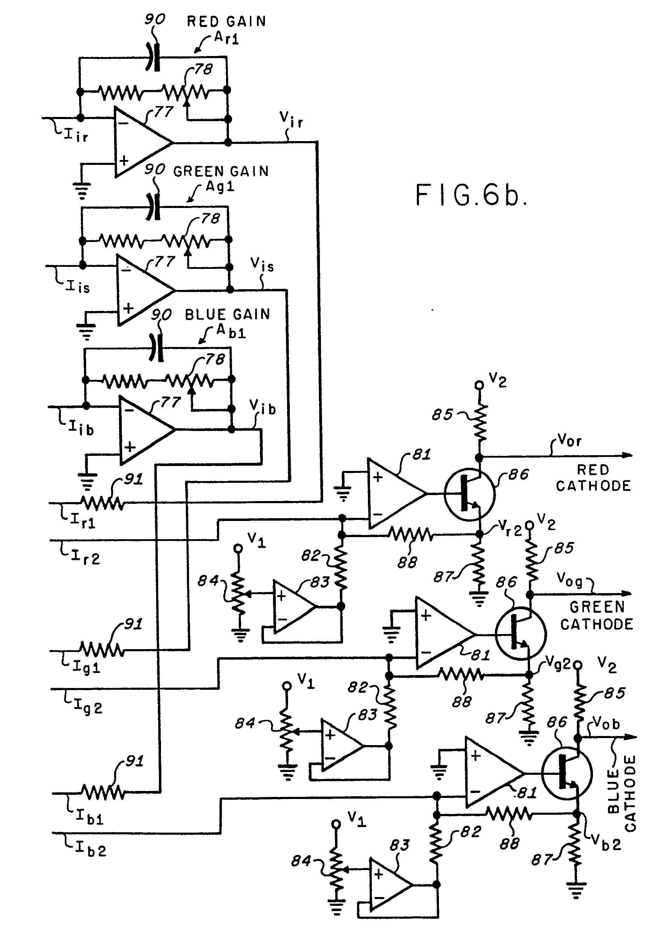

As noted heretofore, the invention is capable of embodiment in analogue (Figure 2), digital (Figure 6) and hybrid (Figure 12) configurations. Referring once again to Figure 1, a block diagram of the analogue embodiment of the brightness correction and colour selection circuitry is shown. An initial setting of a brightness control 27, which may be a manual control accessible to the display operator, establishes a reference brightness level $V_{br}$ which denotes the reference display brightness energising voltage at the input to the correction circuitry 31, 32 and 33. Other suitable sensors or control devices, such as a photosensor responsive to the ambient lighting, may also be used. The brightness control 27 is used to set the nominal display brightness over its range from blanked to full brightness and is preferably followed by a buffer amplifier 36 which provides a DC output voltage ranging typically from 0 VDC to +10 VDC. It should be noted that 0 VDC represents a fully blanked CRT display, while +10 VDC represents a CRT display at maximum brightness. The inputs to the three correction circuits 31, 32 and 33, one for each colour red, green and blue, are connected in parallel and driven by the output of the buffer 36.

In the analogue embodiment of this invention, wherein the red colour gun circuit is shown in Figure 2 in greater detail, the circuits 31, 32 and 33 may consist of non-linear amplifiers providing an output responsive to the CRT gun gamma factor and further providing a squaring function. Each correction amplifier is preferably comprised of a logarithmic amplifier 30, a gain multiplier 51, 52, 53 and an anti-logarithmic amplifier 54. The amplifiers 51, 52 and 53 have gains adjusted to correspond to the individual gamma factor of the related colour gun, while the amplifiers 54 are substantially identical to each other with respect to gain characteristics.

Similar correction circuitry is provided for each of the primary colours red, green and blue. The aforesaid corrected signals feed correspondingly into variable gain amplifiers 24, 25 and 26 which respectively provide signal outputs to the colour cathodes of the CRT 20, as symbolised by $V_{or}$, $V_{og}$, and $V_{ob}$.

The input video colour command 28 and 29 in digital form is received by the decoder 30, processed through the buffer 34, and directed to the gain control network 35 which includes an array of resistors for each of the variable gain amplifiers 24, 25 and 26 which cooperate with the decoder 30 to vary the output levels $V_{or}$, $V_{og}$, $V_{ob}$, thereby driving the respective colour cathodes to the relative brightness levels necessary for the formation of a predetermined hue.

In the digital embodiment, as shown in Figure 6, the buffered reference brightness signal $V_{br}$ is conducted to an eight-bit analogue/digital (A/D) converter 70, the output of which between sampling cycles is stored in a latch 71. The latch 71 output feeds an eight-bit bus which addresses red, green and blue PROMs 72, 73 and 74, the PROMs being programmed for gamma/square correction as described below. A memory cell addressed in the PROMs 72, 73 and 74 is read out into corresponding eight-bit digital/analogue converters 75, and there converted to analogue form suitable for amplification, as shown typically by red amplifier 77. The analogue output of the ampifier 77, representing the corrected primary colour brightness reference component in this embodiment, is then coupled to an eight-bit D/A converter 80, which is capable of operating at video switching rates. Each colour select PROM 79 has in memory the colour gain factor corresponding to each selected colour of the sixteen combinations of raster and stroke colours available. Since the proportions of primary colours for a resultant hue are fixed from tube-to-tube, no change in PROM 79 is required with variation in tube characteristics. Each converter 80 provides an analogue output which is proportional to the product of the analogue equivalent output of the related PROM 79 and analogue amplifier 77. Adjustable bias voltage from source $V_1$ and offset amplifiers 83 feed respective linear amplifiers 81 through resistors 82 and thereby transistors 86 to set the cathode blanking level. The analogue output from each converter 80 also feeds the input node of the related amplifier 81 in common with the bias amplifier 83, thus driving the transistor 86 to provide the resultant cathode energisation $V_{or}$.

Returning now to Figure 2, in which like numbers represent like or similar components, there is shown a composite block diagram and schematic of the analogue brightness and tracking correction circuits 31, 32 and 33. The input $V_{br}$, which ranges between 1-10-VDC, is coupled into the logarithmic amplifier 50. Although only one such amplifier is required, individual amplifiers may be used for each colour gun if desired. The output of the logarithmic amplifier 50 is in turn coupled into the linear amplifiers 51, 52 and 53. Note that three such linear amplifiers are required, one for each colour gun, with their inputs paralleled. As will be outlined further, the gain of the linear amplifiers 51, 52 and 53 is adjusted to be a numerical value equal to 2/γ for the gamma factor of a particular colour gun, with γ determined experimentally. The output of one linear amplifier 51, $-2/\gamma_r \log V_{br}$, for the colour red, for example, is then directed to an inverse or antilog amplifier 54, one such amplifier being required for each colour gun, and each coupled to its respective linear amplifier at the input. The outputs of the antilog amplifiers 54, denoted by $V_{ir}$, $V_{ig}$, and $V_{ib}$, are coupled into the corresponding variable gain video amplifiers 24, 25 and 26. Those skilled in the art will appreciate that one such amplifier must be used for each colour gun although for purposes of clarity in presentation, only the red amplifier is shown herein. The red brightness signal $V_{ir}$ is then, for example, coupled into a linear amplifier 56, with resistor 55 interposed therebetween. Resistors 55 and 57 form a voltage divider, thereby defining the gain of the operational amplifier 56 as is well known in the art. The amplifier 56 is thereby adjusted for a suitable gain factor and, by the phase inversion that occurs therein, provides an output $-V_{ir}$. Brightness control signal $-V_{ir}$ is now conducted through the variable resistor 58 which, in conjunction with resistor 60, serves to attenuate the input signal $-V_{ir}$ to any desired value. The output of the linear operational amplifier 59 is coupled to the base of a variable gain transistor amplifier 65, the collector of which is biased through a dropping resistor 61 from voltage source $V_3$ typically of the order of 60—75 VDC. Supply voltage $V_3$ is selected to compare with the blanking voltage required at the colour gun. Also tied to the collector of transistor 65 is an output line which feeds the cathode of the colour gun, in the example shown $V_{or}$ for the red cathode. The emitter of the transistor 65 is coupled to the resistor 60 and also to a variable current source 62 which is adjusted to provide a constant voltage bias across the collector resistor 61. The constant current supply 62 may be powered by low current DC supply $V_4$, typically of the order of −15 VDC. After phase inversion and amplification, input voltage $-V_{ir}$ appears as voltage $V_r$ at the emitter of the transistor 65. At this node, which is also connected to one end of the resistor 60 and constant current source 62, the network 35 of fixed resistors of predetermined values is connected. These resistors are tied at their common node to the emitter of the transistor 65, and at their individual ends to a network of corresponding buffer amplifiers 34, one buffer being provided for each control line *a* to *m*. The resistor $R_{ar}$ typically denotes one resistor in the network 35 which is used to determine the analogue gain of the red colour gun for a selected hue.

Also shown in Figure 2 is the digital decoder 30, receiving the video command 28 digitally encoded, typically in binary form, a group of four input bits denoted as colour bit 0 to colour bit 3 permitting the selection of up to sixteen individual colours. The input video command 28, supplied by a digital symbol generator, not shown, determines which of the sixteen colour hues will be selected. Each output of the decoder 30 is connected to a corresponding input of the buffer array 34, the output of each buffer amplifier being directed to a corresponding resistor in the network 35, as described above. Also shown is a digital video enable command 29, applied to the decoder strobe input. It will be recalled that the input voltage $V_{br}$ is a buffered DC voltage adjustable from 0 VDC to +10 VDC by means of the pilot's brightness control, typically a potentiometer. When $V_{br}$ is a 0 VDC, the CRT display will be fully blanked, while at +10 VDC it will be at maximum brightness. The logarithmic amplifier 50 has an output-voltage-to-input-voltage response of:

$$V_o = -\log V_{in} \qquad (1)$$

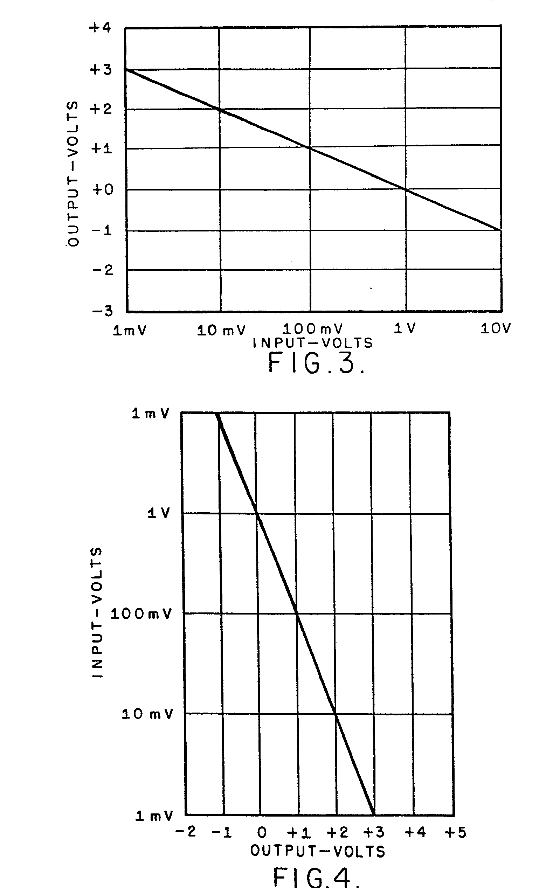

so the output of the logarithmic amplifier is $-\log V_{br}$. This response is plotted in Figure 3 where it is seen that the output voltage of the amplifier 50 varies in a straight line with the logarithm to the base 10 of the input voltage $V_{br}$. Referring again to Figure 2, the linear amplifiers 51, 52 and 53 are adjusted to provide a gain of $2/\gamma$ which for an individual colour gun is approximately unity but may be greater than 1 or less than 1. The output of a linear amplifier is therefore the product of its gain factor $2/\gamma$ and the input voltage $-\log V_{br}$, of $-2\gamma \log V_{br}$. Note that since the gamma factor varies with each colour gun, the gain setting of each amplifier 51, 52 and 53 will not be identical. The output of a selected linear amplifier is then conducted to its corresponding anti-logarithmic amplifier 54, again there being provided an individual anti-logarithmic amplifier 54 for each of the colour guns red, green and blue. The amplifier 54 is designed to have a characteristic:

$$V_{out} = 10^{-V_{in}} \qquad (2)$$

The response is plotted in Figure 4 in which the output voltage is now seen to be a straight line logarithmic function of the input voltage. By multiplying the input voltage $V_{br}$ by the gain factors of the logarithmic amplifier 50, linear amplifier 51, and anti-logarithmic amplifier 54, the output voltage $V_{ir}$ may be determined for the red colour gun. Thus,

$$V_{ir} = 10^{(2/\gamma)(\log V_{br})} \qquad (3)$$

or

$$V_{ir} = V_{br} 2/8^r \qquad (4)$$

Similarly, the output voltages for the green colour gun $V_{ig}$, and the blue colour gun $V_{ib}$, may be shown to be

$$V_{ig} = V_{br} 2/\gamma_g \qquad (5)$$

or

$$V_{ib} = V_{br} 2/\gamma_b \qquad (6)$$

Of course, it will be apparent to those skilled in the art that the gamma factors and corresponding gain factors must be individually determined for each colour gun. As a result of the above processing, $V_{ir}$, $V_{ig}$ and $V_{ib}$ are now corrected positive DC voltages within the range of approximately 0 VDC to +10 VDC. As may be seen from Figure 2, the outputs of the anti-logarithmic amplifiers 54 are next directed to the variable gain video amplifiers 24, 25 and 26. The resistors 55 and 57 are selected to provide a suitable gain for the linear amplifier 56 which after phase inversion provides an output $-V_{ir}$. The required gain of the variable gain amplifiers 24, 25, and 26 is a function of the desired output brightness and colour selected. For example, referring to Figure 9 for a raster display, brightness of 20 Foot-Lamberts for the red colour gun requires a cathode modulation of 60 volts DC. Thus, the gain of the multistage amplifier 24 must be adjusted to afford an output cathode energisation of 60 volts DC or a proportionately lesser value for reduced brightness. The gain of the intermediate amplifier 59 is determined by the adjustable resistor 58 and by the fixed resistor 60 in combination with a resistor selected from the network 35, as follows: in the blanked state, the maximum gain of the amplifier 59, denoted as $A_{r1}$, may be determined by

$$V_r = A_{r1} V_{ir} \qquad (7)$$

and

$$A_{r1} = \frac{R_{60} (\Omega)}{R_{58} (\Omega)} \qquad (8)$$

where the resistor 60 has a maximum value preferably of the order of 100,000 ohms. Similarly, values of the amplifier gain will be predetermined by the resistor 58 in each colour gun amplifier 25 and 26. Thus the overall gain function of each amplifier 59 is set by the corresponding variable resistor 58. The variable current source 62 is adjusted to provide a constant bias voltage across the collector resistor 61 to set the blanking voltage level for each CRT cathode so that when the input brightness reference voltage is at zero, the display will be blanked; this value varies typically from +60 V to +75 VDC. Since the output of the operational amplifier 59 is once again inverted, an increase in reference level $V_{br}$ will result in a reduction of cathode voltage from the blanking level which in turn increases display brightness. Thus, with an input at $V_{br}$ of 0 VDC, the output $V_{or}$ would be biased at approximately 60 VDC resulting in a fully dimmed display. With a brightness reference level $V_{br}$ of +10 VDC, the voltage $V_{or}$ will be reduced to a level less than 60 VDC, to a value determined inpart by the gain of the amplifier 65. Thus, by variably predetermining the gain of the amplifier 24, 25 and 26 through selection of resistors in the network 35, the relative brightness of the CRT colour guns for a preselected colour may be controlled in accordance with the input video colour command.

It should be noted that all brightness correction and colour tracking gains, voltages, and circuits discussed to this point are essentially low bandwidth and DC variables, operating at substantially less than video frequencies. The colour select circuitry, however, must be capable of operating that the required video speed, wide bandwith signal of 6—12 megaHertz, as will be discussed below.

Referring again to decoder 30 of Figure 2, which may be a conventional hexadecimal decoder, the inputs are seen to comprise four colour bits 28 and one video enable signal 29. When the video enable signal is low, all of the decoder outputs remain high. This results in all the buffer 34 outputs being high, or open circuited. The voltages at the three cathodes of the CRT are then determined by the preset blanking bias currents, $I_r$, $I_g$ and $I_b$, corresponding to each of the respective red, green and blue colour guns. In this condition, the voltage on all three colour gun cathodes is at cutoff and the display is blank. When the video enable signal is high, then the remaining four colour bit inputs may be used to prescribe a unique output of the 16 outputs $a$ to $m$ available from the decoder 30. The selected decoder output is terminated to ground internally of the decoder, thus in turn grounding the gain-selector resistor of the network 35 to which it is individually connected through the buffer 34. When the input colour bit signature is changed in response to a change in colour command, there will be a corresponding change in the grounded resistor associated with the network 34. The resulting change in amplifier gain will energise a colour gun cathode in accordance with the desired relative brightness levels for a commanded colour. For example, to select the colour red, the binary colour code 0001 is placed on colour bit 3 to colour bit 0, respectively, bit 3 representing the most significant colour bit. As may be seen from Figures 2 and 5, the stroke colour red at the decoder 30 corresponds to output line $a$ which connects to resistor $R_{ar}$ of the resistor network 35. Thus when the decoder output $a$ is forced low by the input command 28 and 29, the resistor $R_{ar}$ is grounded at the end adjacent the decoder. Since it is desired that only the red colour gun be activated when the colour red is selected, only resistor $R_{ar}$ will be grounded. The green and blue amplifiers will be blanked. On the contrary, if an input colour command for white is applied, where the colour code is 0111, an appropriate gain-select resistor connected to terminal $g$ of the decoder 30 will be grounded at each of the three video amplifiers 65 since red, green and blue must be combined to produce white. Thus, the decoder is designed to ground a selected resistor of the network 35 associated with each of the three video amplifiers 65. For a red rastor display, the resistor connected to the decoder output 5 would be grounded. Figure 5 shows a typical tabulation of interconnections between the decoder and the red, green and blue resistor networks to produce the desired amplifier gain for each selected colour.

The effect of terminating one of the selected resistors in the network 35 to ground is to cause a corresponding change in the value of $V_{or}$ at the collector of the transistor 65, the current gain of amplifier 65 being inversely proportional to the value of resistor $R_{ar}$. The resultant output voltage $V_{or}$ at the collector of transistor 65 may be expressed as follows:

$$V_{or}=A_{r2} V_r \qquad (9)$$

Similarly

$$V_{og}=A_{g2} V_g \qquad (10)$$

and

$$V_{ob}=A_{b2} V_b \qquad (11)$$

The values for the required gain factors $A_{r2}$, $A_{g2}$ and $A_{b2}$ of the colour video amplifiers 65 are shown in Figure 5 for a representative range of desired colours and brightnesses. The cathode drive voltage from the blank level at the red colour gun, $V_{or}$, for example, may be determined by multiplying the input signal $V_{lr}$ by the overall gain of the variable gain amplifier 24. Thus,

$$V_{or}=A_{r2}(A_{r1} \cdot V_{lr}) \qquad (12)$$

or, substituting equation (4) for $V_{lr}$,

$$V_{or}=A_{r2} \cdot A_{r1} \cdot V_{br}^{2/\gamma r} \qquad (13)$$

Since the phosphor brightness follows the relationship B=KV, the resulting brightness of the red display may be expressed as a function of $\gamma$ and the amplifier gains:

$$B_r=K_r(A_{r1} A_{r2})^{\gamma r} V_{br}^2 \qquad (14)$$

Similarly, for the green and blue colour guns. Thus, it is seen that the output brightness is, as desired, a function of the gamma coefficient and the square of the reference brightness voltage. It is clear that the variation from one display to another of gamma and the arbitrary gain factors $K_r$, $K_g$ and $K_b$ may be equalized by adjusting the gain set potentiometer 58 as shown in Figure 2.

In another embodiment as shown in Figure 6, the gamma and colour tracking correction is accomplished by the use of digital circuitry. An advantage of this configuration is that it may be less sensitive to environmental changes such as variations in temperature, which may cause instability in the logarithmic gain amplifiers used in the analogue embodiment. Also, as shown in Figures 9 and 10, the gamma relationship between drive voltage and brightness of the CRT may not be reducible to a simple exponential mathematical relationship as assumed in the analogue embodiment. The use of a programmable memory results in more versatility and better colour tracking, since compensation may be made for a variable gamma factor. As shown in Figure 6, and as already mentioned, the input reference brightness display level $V_{br}$, is coupled into the eight-bit analogue/digital converter 70. The output of the A/D converter 70 is then directed to the corresponding eight-bit latch 71 which may be an octal flip-flop. The output bus of the latch 71 feeds the three programmable read-only memories (PROM) 72, 73 and 74, one assigned to each of the respective primary phosphors red, green and blue. In the configuration shown, the converter 70 converts the input analogue DC voltage $V_{br}$ to an eight-bit word, through a four-bit converter may be used if lesser resolution is acceptable, and more than eight bits may be used for greater resolution. The memory arrays, PROMs 72, 73 and 74, are organised in a architecture of 256 eight-bit words. The data stored in a PROM at the selected address is then bussed to the eight-bit digital/analogue converter 75, where the digital word is reconverted to analogue form. A clock 76 provides inputs to the converter 70 and the latch 71 for controlling the sampling sequence. Details of the clock are not shown since it is of the type familiar to those skilled in the art, but it should be operated at a rate sufficient to avoid flicker. Also not shown are the positive and negative power supplies conventionally associated with the ampifier and control circuitry. The output current of each converter 75 is then coupled into the input of the associated current-to-voltage amplifier 77, which may incorporate a filter capacitor 90 to reduce flicker, similar amplifiers being provided for each colour gun. A variable resistor 78 connected between the input and output of each amplifier 77 acts to adjust the gain thereof.

The input colour command signal 28, 29 in binary form is applied to the colour select PROMs 79 *a, b* and *c* which must be of a type capable of operating at a video rate. Three such PROMs, one for each colour gun, have their inputs connected in parallel to the aforesaid colour command signal. The eight-bit output of a PROM 79 is referred to the digital-to-analogue converter 80, wherein is also coupled the outputs $V_{ir}$, $V_{ig}$, $V_{ib}$ respectively, of the amplifiers 77. The combined output voltage of each converter 80 then feeds the related amplifier 81. Also connected to the same input of each amplifier 81 through a resistor 82 is the output of the bias control amplifier 83, powered by DC source $V_1$ through the adjustable resistor 84. Cathode bias voltage $V_2$, approximately 70 VDC, applied through the resistor 85 to the collector of the transistor amplifier 86, sets a nominal blanking level voltage at the red cathode. Note that the circuit of the amplifiers 81 and 86 is modified from that shown in Figure 2. The blanking bias may be individually adjusted by a varying resistor 84 feeding the related offset amplifier 83 to suit the particular colour gun characteristics. The bias voltage at the cathode when modulated by the output $V_{or}$, $V_{og}$ and $V_{ob}$ of amplifiers 86 will determine the resultant cathode brightness.

It may be recalled that the input reference brightness voltage $V_{br}$ is a buffered voltage ranging from 0—10 VDC. This DC voltage is then converted into an eight-bit word by the converter 70. Such eight-bit word, encoded in binary form, permits the resolution of 256 different codes of brightness levels. If greater precision is required, this could be increased to ten or even twelve bits, at some increase in component complexity. Thus, when the input reference brightness voltage is 0 VDC, the output word is 00000000 or zero in decimal notation. When the input reference voltage is +10 VDC, the output word is 11111111, or 255 in decimal notation. The eight-bit word is used to address the three read-only memories 72, 73 and 74, one for each colour gun.

The PROMs 72, 73 and 74 must be capable of storing 256 eight-bit words. Each converter 70 will address a particular memory location based on the applied analogue voltage corresponding to the reference brightness level. The output word stored in memory must be proportional to the exponential $2/\gamma$. For simplicity, let *n* be the number or output word stored at the address location *m*, where the output data is scaled from 0 to 255. Thus, when m=0, n=0, and when m=255, n=255. Intermediate values of n between 0 and 255 will be scaled according to the proportionality factor $n=km^{2/\gamma}$. This procedure is permissible, since the gain of the amplifier can be set to give the correct absolute value in the output. The value of *k* may be computed for any assumed factor of gamma by inserting the value of 255 for n=m, thus:

$$k = \frac{n}{m^{2/\gamma}} \qquad (15)$$

or, for n=m=255,

$$k = \frac{255}{255^{2/\gamma}} \qquad (16)$$

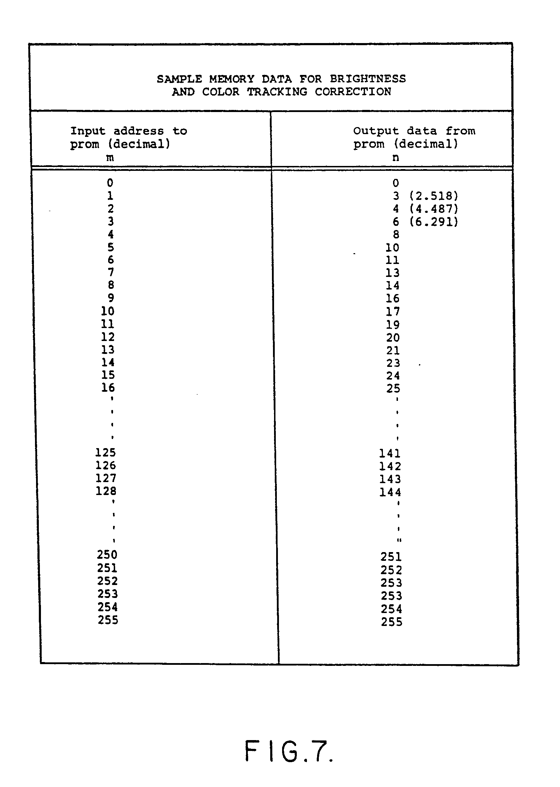

Figure 7 shows a sample table in which representative addresses are developed for the hypothetical red cathode with $\gamma=2.4$. To develop the data for each address of the PROM, for each incremental value of m from 0 to 255, compute the resultant factor

$$n = 2.518 m^{0.833} \qquad (17)$$

(where k=2.518) and round the result to the nearest integer. Thus, for example, at address *m*=3, the computed value of *n* is 6.281, and the value of the output data entered in the PROM is 6. If gamma for a particular colour gun is found to be a variable, the value may be determined experimentally at each brightness level and accordingly stored as a modified factor to the accuracy desired.

Referring again to Figure 6, the outputs of the PROMs 72, 73 and 74 are read out by the converters 75 in the form of an analogue current ranging from 0 to 2 ma. These outputs are then amplified by the current-to-voltage amplifiers 77 with the resistors 78 adjusted to provide an output variable between approximately 7—12 VDC with $V_{br}=+10$ VDC. Thus, the input brightness reference level $V_{br}$ has been multiplied by the exponential $2/\gamma$ and the output, $V_{lr}$, is converted into voltages ranging from 0 to $+10$ VDC. Similar circuitry is applied to the outputs $V_{lg}$ and $V_{lb}$ for the green and blue colour guns, respectively.

The PROMs 79 are used to vary the cathode brightness levels in accordance with a predetermined table of brightness for each colour hue. Each PROM 79 has thirty-two addressable locations, of which sixteen are used for colour selection, and the other sixteen are available for selecting an off or blanked condition. These are eight-bit output data lines, thus up to thirty-two eight-bit words may be stored and addressed. A particular memory location in each colour select PROM 79 is addressed by the four-bit input video binary colour command 28 and video enable 29, the inputs of the PROMs being connected in parallel to each of the command lines. Each memory location has stored therein a digital number corresponding to the desired colour select gain factor.

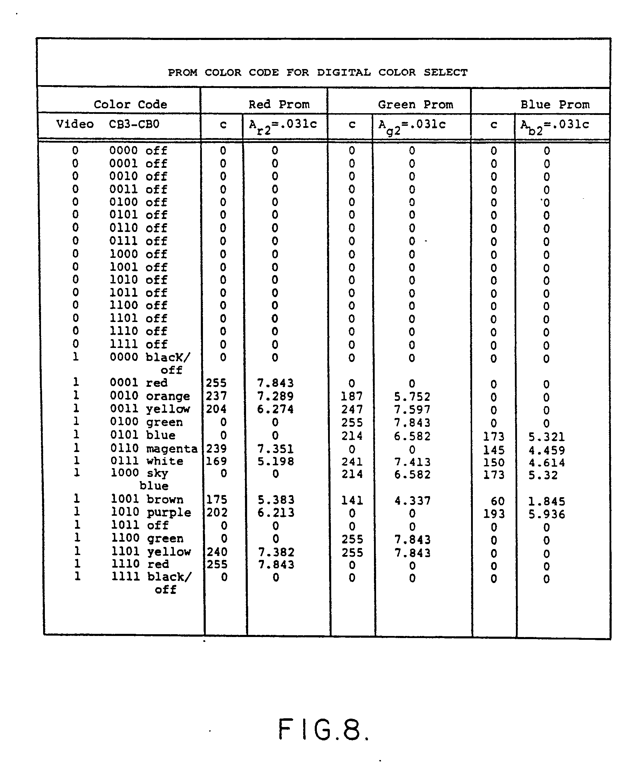

Figure 8 shows a proportionality factor C in analogue form corresponding to the word stored at each address for reproducing a desired colour, using a typical scaling factor

$$A_{r2}=V_{or}/V_{lr}=0.031C$$

to relate amplifier gain factor $A_{r2}$ to the decimal value stored in memory in binary form. There are thirty-two addressable locations, each of eight-bit word length. As noted heretofore, an eight-bit word permits resolution of 256 different brightness levels. Therefore, C ranges from 0 to 255. The gain of each transistor amplifier 86, typipcally an amplification of the order of 20, is determined by the collector resistor 85 and the emitter resistor 87. The voltages at the emitter of amplifier 86, $V_{r2}$, $V_{g2}$ and $V_{b2}$, are determined by the currents $I_{r2}$, $I_{g2}$, $I_{b2}$, respectively, flowing through the resistors 88 connected between corresponding DAC 80 outputs and transistor 86 emitters.

For example, for the colour red, the output current of the red DAC, $I_{r2}$, is found from

$$I_{r2}=\frac{C}{255}I_{r1} \qquad (18)$$

where C is the decimal value of the word addressed in the related PROM 79. The voltage $V_{r2}$ developed at the emitter of transistor 86 is determined by the current $I_{r2}$ through the series resis-

tor 88 which is preferably of the order of 2,000 ohms. DAC current $I_{r1}$ is determined by the voltage $V_{lr}$, $V_{lg}$, $V_{lb}$, applied to the series resistor 91, which is preferably of the order of 5,000 ohms. Hence, typically,

$$V_{r2}=2,000\ I_{r2}=2,000\frac{C}{255}\cdot\frac{V_{lr}}{5,000} \qquad (19)$$

which denotes the red phosphor energisation as a function of the brightness variable C, which is predetermined by the colour selected, as in Figure 8. The transistor 86 from $V_{r2}$ to $V_{or}$ is determined by the ratio of the collector bias resistor 85 to the emitter bias resistor 87. If the gain factor $V_{or}/V_{r2}$ is conveniently selected to be 20, then the system gain factor $A_{r2}$ is found as

$$A_{r2}=\frac{V_{or}}{V_{lr}}=$$

$$(20)\ (2,000)(\frac{C}{255})(\frac{1}{5,000})=0.031C \qquad (20)$$

Figure 8 shows a variable gain factor $A_{r2}$ which corresponds to the selected colour component brightness for each input colour command. Since the cathode voltage $V_{or}$, $V_{og}$ and $V_{ob}$ now depends on both the reference current $I_{r1}$, $I_{g1}$, $I_{b1}$, and on the number stored at the memory location addressed in the PROM 79, there is provided an output voltage signal representing a brightness level modulated by the selected colour cathode brightness level of Figure 8 and the reference brightness control setting $V_{br}$. This signal is the desired cathode gun energisation in accordance with the pre-determined values.

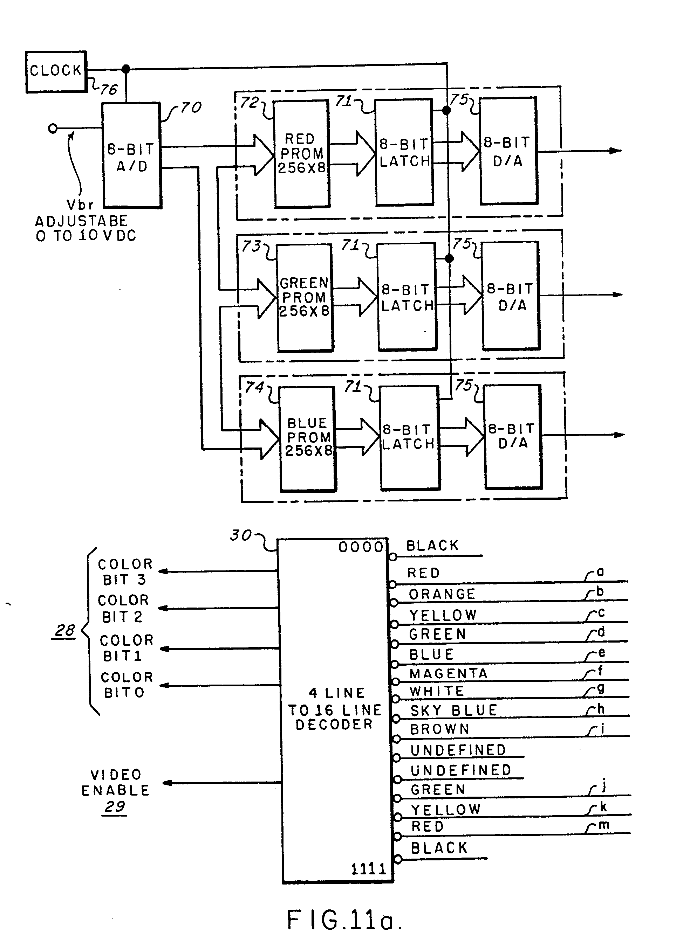

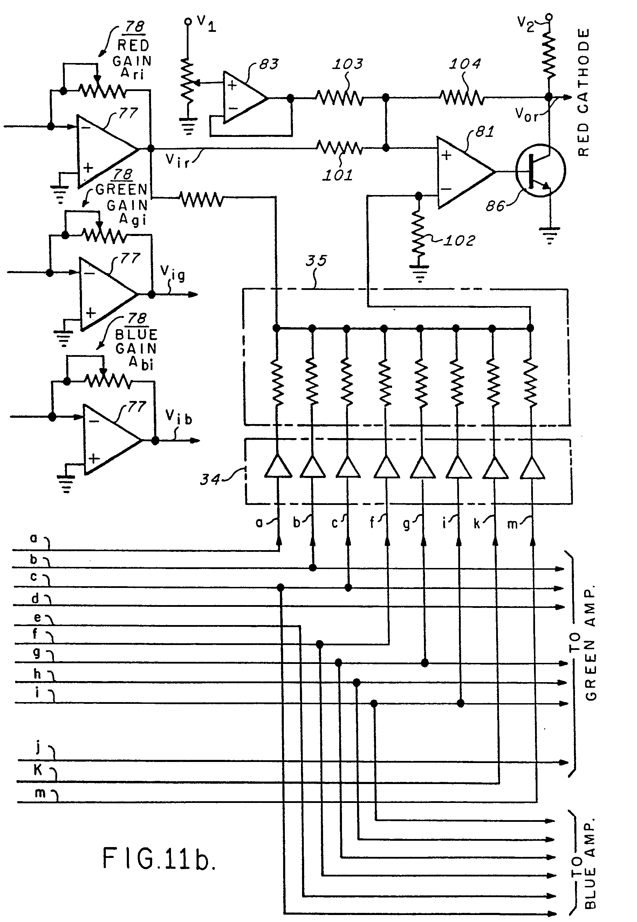

Another embodiment of the present invention shown in Figure 11, comprises a hybrid digital/analogue configuration, wherein the gamma-square correction is accomplished in digital memory, and the colour selection is provided by a variable gain linear amplifier, whose gain is varied by a colour control decoder and resistor bias network, as in the analogue system of Figure 2. In this embdoiment, the requisite linear amplifier gain factors would be determined by resistors the values of which are preferably as shown in Figure 12. Note that these values differ from Figure 5, since the colour amplifier circuits have a different configuration from the analogue circuit of Figure 2.

The digital section provides brightness and colour tracking correction, similar to the corresponding all digital design of Figure 6. It will be obvious to those skilled in the art that the corresponding elements perform similar functions. Thus, an input brightness reference signal $V_{br}$ is converted from analogue to digital form in the eight-bit A/D converter 70. The output bus feeds three colour PROMs 72, 73 and 74, respectively. Each PROM has an appropriate correction factor stored at each location corresponding to a select input brightness signal. At any setting of $V_{br}$, corresponding correction factors will be bussed to latches 71 and thence to eight-bit D/A converters 75. The corrected signal is then applied to the input of the amplifier 77. The gain of the amplifier 77 is adjustable by the feedback potentiometer 78, and a resulting signal $V_{Ir}$, $V_{Ig}$ and $V_{Ib}$ fed to the input of the amplifier 81.

The colour decoder 30 acts in a similar manner as described in conjunction with Figure 6. While the gain control network 35 is now applied to the operational amplifier 81, rather than transistor amplifier 86, this is merely illustrative of manifold circuits to which the present invention may be applied. The amplifier 81 combines the brightness and tracking signal $V_{Ir}$, $V_{Ig}$, $V_{Ib}$ from the amplifier 77 with the colour selection signal from the decoder 30. The combined signal, corrected for colour, brightness and tracking, is then applied to the base of the transistor amplifier 86, whereupon it is amplified sufficiently to traverse the brightness range from blanked to full output, and applied to the respective colour cathodes.

It will be seen, therefore, that the signal conditioning circuits shown provide non-linear colour gun brightness corrections depending on the gamma factor and proportional to the square of the input brightness reference voltage for each of the three colour guns, all relatively low frequency circuits operating with minimal bandwidth requirements, while the colour selection circuit, which is required to operate at video rates, acts only to vary the brightness in a linear manner. This approach considerably simplifies the circuit configurations which have been used in the prior art where the reference brightness conditioning circuitry was also required to operate at video bandwidths, requiring complex mathematical correction circuitry.

**Claims**

1. Colour selection and brightness tracking control apparatus for a colour cathode ray tube display system subjected to viewing under a wide range of ambient light conditions, the apparatus comprising a colour cathode ray tube (20) responsive to video colour commands having a display screen for emitting images in a plurality of different colours dependent upon the independent and variable energisation of colour gun cathode means for producing at least two independent primary colours, the relative brightnesses of which determine each of the plurality of colours, characterised in that the apparatus further comprises reference display brightness control means (27) for providing a signal substantially independent of the video colour commands for setting variable brightness energisation levels over a range of desired brightness levels, means (31, 32, 33) responsive to a common signal from the reference display brightness control means (27) for providing a brightness control signal corresponding to each of the primary colour emission characteristics of the colour gun cathode means over the brightness range, video colour command means (28, 29) responsive to random colour command signals for producing at least one image to be displayed at a video frequency rate in at least one predetermined colour comprised of components of the two primary colours at predetermined relative brightness levels, wherein the video colour command operates at video frequency and the means for providing a brightness control signal operates at substantially less than the video frequency, and combining means (24, 25, 26) responsive to the video colour command means (28, 29) and the brightness control signal for energising the cathode means, thereby producing the predetermined colour image at the reference brightness level.

2. Apparatus according to claim 1, characterised in that the means (31, 32, 33) for providing brightness control signals comprises analogue means (50) for converting the reference display brightness energisation of the brightness control means (27) from a decimal value into an equivalent logarithmic signal, converting the logarithmic signal for brightness and colour tracking by linear combination of logarithmic values and converting the converted logarithmic signal to an equivalent decimal value representing the cathode energisation signal corresponding to each of the primary colour emission characteristics, over the brightness range, for each colour gun of a given CRT, first linear amplifier means (51, 52, 53) for normalising the cathode energisation from the first linear amplifier means, and in that the means responsive to the video colour command means (28, 29) includes means (35) for controlling the gain of the second linear amplifier (54) in accordance with the independent cathode energisation required to produce each of the predetermined colours for at least one image.

3. Apparatus according to claim 2, characterised in that the analogue means for converting for brightness and colour tracking further comprises a logarithmic amplifier (50), a linear amplifier (51, 52, 53) with gain proportional to $2/\gamma$, and an anti-logarithmic amplifier (54), where $\gamma$ is a constant factor representing the manner in which the light intensity of a colour gun phosphor varies in accordance with the cathode energisation.

4. Apparatus according to claim 1, characterised in that it further comprises means (70) responsive to the reference display brightness signal from the brightness control means (27) for converting from an analogue signal to an equivalent digital form, in that the first memory means (72, 73, 74) is responsive to said reference brightness signal for storing the functional relationship $V = KV_{br}^{2/\gamma}$ in digital form, representing the cathode energisation data required to produce the primary colour component brightness over the range of display brightnesses in at least one colour gun, in accordance with the phosphor emission characteristics and colour tracking characteristics of the colour gun, where

V=brightness reference signal corrected for phosphor characteristics and colour tracking

$V_{br}$=uncorrected reference display brightness level

K=normalizing gain constant

γ=factor characterising light intensity of a colour gun phosphor,

means (71) for deriving from the memory means the cathode energisation data in digital form, means (25) responsive to the digital cathode energisation data for converting from digital form to analogue form, first linear amplifier means (83) for normalising the analogue form of cathode energisation data to a predetermined gain factor, and second linear amplifier means (81), responsive to the normalised cathode energisation data from the first linear amplifier means, and in that the combining means responsive to the video colour command means comprises means (35) for controlling the gain of the second linear amplifier in accordance with the independent cathode energisation required to produce each of the predetermined colours for at lesat one image.

5. Apparatus according to claim 3 or 4, characterised in that the second linear amplifier means includes transistor amplifier means (86) having a collector and an emitter and provided with collector and emitter voltage bias means, the collector bias means also being connected to the cathode means and means for varying the emitter bias by at least one gain select resistor (88) having one end connected to the emitter, the resistor having an opposing end connected to, and responsive to, the video colour command means (28, 29) and the second linear amplifier having a gain inversely proportional to the magnitude of the gain select resistor.

6. Apparatus according to any of the preceding claims, characterised in that the brightness control signals are calculated to correct for non-linear phosphor brightness response and colour tracking, and are expressed in functional form as a gain coefficient having an exponent comprised of the quotient 2/γ, wherein the γ factor characterises the absolute brightness of a colour gun as a function of cathode energisation.

7. Apparatus according to claim 5, characterised in that it further comprises second memory means (79) responsive to said video colour command means (28, 29) for storing further cathode energisation data in digital form representing the predetermined values of each of the primary colour components for at least one colour image, and means for deriving from the first and the second memory means (72, 73, 74; 79) the cathode energisation data in digital form.

8. Apparatus according to claim 5 or 7, characterised in that the first memory means (72, 73, 74) comprises at least one programmable read only memory with $m$ addressable locations, corresponding to a respective plurality of CRT colour gun brightness control settings, a number $n$ being stored at each said location characterising one of a plurality of brightness and colour tracking correction factors, said number being characterised by the relation

$$n=km^{2/\gamma}$$

where

k=proportionality constant

γ=constant characterising light intensity of a colour phosphor.

9. Apparatus according to any of the preceding claims, characterised in that the video command means (28, 29) commands a predetermined colour for each of at least one of two images, one stroke written and one raster written.

10. A method of correcting a colour cathode ray tube display instrument for phosphor brightness and colour tracking, characterised in that the method comprises the steps of:

applying a colour command modulation signal at a video frequency rate,

applying a brightness and colour tracking modulation signal at substantially less than the video frequency rate,

providing a brightness reference drive signal in accordance with a desired viewing brightness level,

correcting the reference signal by a gain factor representing the manner in which the light intensity of a colour gain phosphor varies in accordance with the cathode energisation required for brightness correction and colour tracking and by the predetermined relative brightness of the primary colour components which determine a plurality of colours to obtain the brightness and colour tracking modulation signal,

applying the corrected signal to a variable gain amplifier, and

applying the colour command video signal to the variable gain amplifier whereby the output of the variable gain amplifier provides cathode energisation brightness correction and colour tracking corresponding to the viewing brightness level, to the emissive character of the colour gun phosphor, and to the selected colour and display writing mode.

11. A method according to claim 10 characterised in that the gain factor is obtained by

storing a first data base including a multiplicity of cathode drive excitations required to produce a corresponding plurality of brightnesses of each of the primary colour emissions of each CRT colour gun to correct for phosphor brightness reponse, the data base further corresponding to the brightness reference drive signal corrected for colour tracking, and

applying at least one of the multiplicity of cathode drive excitations to the variable gain amplifier.

12. A method according to claim 11, characterised in that the method comprises the further steps of

storing a second data base including a multiplicity of cathode drive excitations corresponding to the predetermined relative brightnesses of the primary colour components which determine a plurality of colours in the CRT display, said colours being determined in response to the colour command video signal,

applying the colour command video signal to the second data base for deriving the cathode energisations required to produce at least one of the plurality of colours, and

combining the cathode drive excitations of the first and second data bases to provide a single cathode drive modulation representing the cathode energisation corrected for brightness and colour tracking corresponding to the emissive character of each colour gun phosphor and selected colour and display writing mode.

**Patentansprüche**

1. Farbauswahl- und Helligkeitsgleichlauf-Steuervorrichtung für ein Farb-Kathodenstrahlröhren-Anzeigesystem, das unter einem weiten Bereich von Umgebungslichtbedingungen zu betrachten ist, wobei die Vorrichtung eine auf Video-Farbbefehle ansprechende Farb-Kathodenstrahlröhre (20) mit einem Bildschirm zur Aussendung von Bildern in einer Vielzahl von unterschiedlichen Farben in Abhängigkeit von der unabhängigen und veränderlichen Ansteuerung von Farb-Strahlsystem-Kathodeneinrichtungen aufweist, um zumindestens zwei unabhängige Primärfarben zu erzeugen, deren relative Helligkeit jede der Vielzahl von Farben bestimmt, dadurch gekennzeichnet, daß die Vorrichtung weiterhin Bezugs-Anzeigehelligkeits-Steuereinrichtungen (27) zur Lieferung eines Signals, das im wesentlichen unabhängig von den Video-Farbbefehlen ist, um veränderliche Helligkeitsansteuerpegel über einen Bereich von gewünschten Helligkeitspegeln einzustellen, auf ein gemeinsames Signal von den bezugs - Anzeigehelligkeits - Steuereinrichtungen (27) ansprechende Einrichtungen (31, 32, 33) zur Lieferung eines Helligkeitssteuersignals, das jeder der primären Farbemissionscharakteristiken der Farb-Strahlsystem-Kathodeneinrichtungen üer den Helligkeitsbereich entspricht, Video-Farbbefehlseinrichtungen (28, 29), die auf willkürliche Farbbefehlssignale ansprechen, um zumindestens ein darzustellendes Bild mit einer Videofrequenzrate in zumindestens einer vorgegebenen Farbe zu erzeugen, die aus Komponenten der beiden Primärfarben mit vorgegebenen relativen Helligkeitspegeln besteht, wobei der Videofarbbefehl mit Videofrequenz arbeitet und die Einrichtungen zur Lieferung eines Helligkeitsbefehlssignals bei einer beträchtlich niedrigeren als der Videofrequenz arbeiten, und Kombinationseinrichtungen (24, 25, 26) einschließt, die auf die Video-Farbbefehlseinrichtungen (28, 29) und daß Helligkeitssteuersignal ansprechen, um die Kathodeneinrichtungen anzusteuern, wodurch das vorgegebene Farbbild mit dem Bezugs-Helligkeitspegel erzeugt wird.

2. Vorrichtung nach Anspruch 1, dadurch gekennzeichnet, daß die Einrichtungen (31, 32, 33) zur Lieferung von Helligkeitssteuersignalen Analogeinrichtungen (50) zur Umwandlung der Bezugs-Anzeigehelligkeits-Ansteuerung der Helligkeitssteuereinrichtungen (27) von einem Dezimalwert in ein äquivalentes logarithmisches Signal, zur Umwandlung des logarithmischen Signals für einen Helligkeits- und Farbgleichlauf durch eine lineare Kombination der logarithmischen Werte und Umwandlung des umgewandelten logarithmischen Signals in einen äquivalenten Dezimalwert, der das Kathodenansteuersignal darstellt, das jeder der primären Farbemissionscharakteristiken über den Helligkeitsbereich für jedes Farb-Strahlsystem einer vorgegebenen Kathodenstrahlröhre entspricht, und erste lineare Verstärkereinrichtungen (51, 52, 53) zur Normalisierung der Kathodenansteuerung von den ersten linearen Verstärkereinrichtungen umfassen, und daß die auf die Video-Farbbefehlseinrichtungen (28, 29) ansprechende Einrichtung Einrichtungen (35) zur Steuerung der Verstärkung des zweiten linearen Verstärkers (54) in Abhängigkeit von der unabhängigen Kathodenansteuerung einschließt, die erforderlich ist, um jede der vorgegebenen Farben für zumindestens ein Bild zu erzeugen.

3. Vorrichtung nach Anspruch 2, dadurch gekennzeichnet, daß die Analogeinrichtung zur Umwandlung für einen Helligkeits- und Farbgleichlauf weiterhin einen logarithmischen Verstärker (50), einen Linearverstärker (51, 52, 53) mit einer Verstärkung proportional zu 2/γ, und einen anti-logarithmischen Verstärker (54) umfassen, worin γ ein konstanter Faktor ist, der die Art und Weise angibt, in der sich die Lichtintensität eines Farb-Strahlsystem-Phosphors in Abhängigkeit von der Kathodenansteuerung ändert.

4. Vorrichtung nach Anspruch 1, dadurch gekennzeichnet, daß sie weiterhin auf das Bezugs-Anzeigehelligkeitssignal von den Helligkeitssteuereinrichtungen (27) ansprechende Einrichtungen (70) zur Umwandlung von einem Analogsignal in ein äquivalentes Digitalformat umfaßt, daß die ersten Speichereinrichtungen (72, 73, 74) auf das Bezugs-Helligkeitssignal ansprechen, um die Funktionsbeziehung $V = KV_{br}^{2/\gamma}$ in Digitalformat zu speichern, wobei diese Funktionsbeziehung die Kathodenansteuerungsdaten darstellt, die erforderlich sind, um die Primärfarben-Komponentenhelligkeit über den Bereich von Anzeigehelligkeiten in zumindestens einem Farb-Strahlsystem in Abhängigkeit von den Phosphor-Emissionscharakteristiken und Farbgleichlaufcharakteristiken des Farb-Strahlerzeugungssystems zu erzeugen, worin

$V$ = das Helligkeitsbezugssignal, das hinsichtlich der Phosphorcharakteristiken und des Farbgleichlaufs korrigiert ist,

$V_{br}$ = der unkorrigierte Bezugs-Anzeigehelligkeitspegel,

$K$ = eine normalisierende Verstärkungskonstante, und

$\gamma$ = ein Faktor ist, der die Lichtintensität eines Farb-Strahlsystem-Phosphors charakterisiert,

daß Einrichtungen (71) zur Ableitung der Kathodenansteuerdaten in Digitalformat von den Speichereinrichtungen, Einrichtungen (75), die auf die digitalen Kathodenansteuerdaten ansprechen, um diese vom Digitalformat in ein Anlogformat umzuwandeln, erste Linearverstärkereinrichtungen (83) zur Normalisierung des Analogformates der Kathodenansteuerdaten auf einen vorgegebenen Verstärkungsfaktor, und zweite Linearverstärkereinrichtungen (81) vorgesehen sind, die auf die normalisierten Kathodenansteuerdaten von den ersten Linearverstärkereinrichtungen ansprechen, und daß die auf die Video-Farbbefehlseinrichtungen ansprechenden Kombinationseinrichtungen Einrichtungen (35) zur Steuerung der Verstärkung des zweiten Linearverstärkers in Abhängigkeit von der unabhängigen Kathodenansteuerung umfassen, die erforderlich ist, um jede der vorgegebenen Farben für zumindestens ein Bild zu erzeugen.

5. Vorrichtung nach Anspruch 2 oder 4, dadurch gekennzeichnet, daß die zweite Linearverstärkereinrichtung eine Transistorverstärkereinrichtung (86) mit einem Kollektor und einem Emitter einschließt, die mit Kollektor- und Emitter-Vorspannungseinrichtungen versehen ist, wobei die Kollektor-Vorspannungseinrichtung weiterhin mit den Kathodeneinrichtungen verbunden ist und Einrichtungen zur Änderung der Emitter-Vorspannung durch zumindesten einen Verstärkungsauswahlwiderstand (88) aufweist, dessen eines Ende mit dem Emitter verbunden ist, wobei der Widerstand ein gegenüberliegendes Ende aufweist, das mit den Video-Farbbefehlseinrichtungen (28, 29) verbunden ist und auf diese anspricht, und wobei der zweite Linearverstärker eine Verstärkung aufweist, die umgekehrt proportional zur Größe des Verstärkungsauswahlwiderstandes ist.

6. Vorrichtung nach einem der vorhergehenden Ansprüche, dadurch gekennzeichnet, daß die Helligkeitssteuersignale so berechnet sind, daß sie eine Korrektur für nichtlineare Phosphorhelligkeitsanprecheigenschaften und Farbgleichlauf ergeben, und daß sie in fuktioneller Form als ein Verstärkungskoeffizient ausgedrückt sind, der einen Exponenten aufwiest, der aus dem Quotienten $2/\gamma$ besteht, worin der $\gamma$-Faktor die absolute Helligkeit eines Farb-Strahlsystems als Funktion der Kathodenansteuerung charakterisiert.

7. Vorrichtung nach Anspruch 5, dadurch gekennzeichnet, daß sie weiterhin zweite Speichereinrichtungen (79), die auf die Video-Farbbefehlseinrichtungen (28, 29) ansprechen, um weitere Kathodenansteuerdaten in Digitalformat zu speichern, die die vorgegebenen Werte jedes der primären Farbkomponenten für zumindestens ein Farbbild darstellen, und Einrichtungen zur Ableitung der Kathodenansteuerdaten in Digitalformat aus den ersten und zweiten Speichereinrichtungen (72, 73, 74; 79) umfaßt.

8. Vorrichtung nach Anspruch 5 oder 7, dadurch gekennzeichnet, daß die ersten Speichereinrichtungen (72, 73, 74) zumindestens einen programmierbaren Festwertspeicher mit m adressierbaren Speicherplätzen umfassen, die einer jeweiligen Vielzahl von Kathodenstrahlröhren-Farb-Strahlsystem-Helligkeitssteuereinstellungen entsprechen, wobei eine Zahl n an jeder der Spei-

cherplätze gespeichert ist und einen einer Vielzahl von Helligkeits- und Farbgleichlauf-Korrekturfaktoren charakterisiert, wobei diese Zahl durch die Beziehung $n=km^{2/\gamma}$ gekennzeichnet ist, worin

k=eine Proportionalitätskonstante und

$\gamma$=eine Konstante ist, die die Lichtintensität eines Farbphosphors kennzeichnet.

9. Vorrichtung nach einem der vorhergehenden Ansprüche, dadurch gekennzeichnet, daß die Videobefehlseinrichtung (28, 29) Befehle für eine vorgegebene Farbe für jedes von zumindestens zwei Bildern liefert, von denen eines in Strichschreibweise und das andere in Rasterschreibweise erzeugt wird.

10. Verfahren zur Korrektur eines Farb-Kathodenstrahlröhren-Anzeigegerätes hinsichtlich der Phosphorhelligkeit und des Farbgleichlaufs, dadurch gekennzeichnet, daß das Verfahren die folgenden Schritte umfaßt:

Zuführen eines Farbbefehls-Modulationssignals mit einer Video-Frequenzrate,

Zuführen eines Helligkeits- und Farbgleichlauf-Modulationssignals bei einer beträchtlich kleineren als der Videofrequenzrate,

Liefern eines Helligkeits-Bezugsansteuersignals in Abhängigkeit von einem gewünschten Betrachtungshelligkeitspegel,

Korrektur des Bezugssignals durch einen Verstärkungsfaktor, der die Art und Weise darstellt, in der sich die Lichtintensität eines Farb-Strahlsystem-Phosphors in Abhängigkeit von der Kathodenansteuerung ändert, die für eine Helligkeitskorrektur und einen Farbgleichlauf erforderlich ist, und durch die vorgegebene relative Helligkeit der Primär-Farbkomponenten, die eine Vielzahl von Farben bestimmen, um das Helligkeits- und Farbgleichlauf-Modulationssignal zu gewinnen,

Zuführen des korrigierten Signals an einen eine veränderliche Verstärkung aufweisenden Verstärker, und

Zuführen des Farbbefehls-Videosignals an den eine veränderliche Verstärkung aufweisende Verstärker, sodaß der Ausgang des eine veränderliche Verstärkung aufweisenden Verstärkers eine dem Betrachtungs-Helligkeitspegel entsprechende Kathodenansteuerungs-Helligkeitskorrektur und einen Farbgleichlauf für die Emissionseigenschaft des Farb-Strahlsystem-Phosphors und für die ausgewählte Farbe und Anzeige-Schreibbetriebsart liefert.

11. Verfahren nach Anspruch 10, dadurch gekennzeichnet, daß der Verstärkungsfaktor dadurch gewonnen wird, daß

eine erste Datenbasis gespeichert wird, die eine Vielzahl von Kathodenansteuererregungen einschließt, die erförderlich sind, um eine entsprechende Vielzahl von Helligkeiten jeder der Primär-Farbemissionen jeder Kathodenstrahlröhren-Farb-Strahlsysteme zu erzeugen, um das Phosphor-Helligkeitsansprechverhalten zu korrigieren, wobei die Datenbasis weiterhin dem Helligkeits-Bezugsansteuersignal entspricht, das für einen Farbgleichlauf korrigiert ist, und

zumindestens eine der Vielzahl von Kathodenansteuererregungen an den eine veränderliche Verstärkung aufweisenden Verstärker geliefert wird.

12. Verfahren nach Anspruch 11, dadurch gekennzeichnet, daß das Verfahren die folgenden weiteren Schritte umfaßt:

Speichern einer zweiten Datenbasis, die eine Vielzahl von Kathodenansteuererregungen einschließt, die den vorgegebenen relativen Helligkeiten der primären Farbkomponenten entsprechen, die eine Veilzahl von Farben der Kathodenstrahlröhrenanzeige bestimmen, wobei die Farben in Abhängigkeit von dem Farbbefehls-Videosignal bestimmt werden,

Zuführen des Farbbefehls-Videosignals an die zweite Datenbasis zur Ableitung der Kathodenansteuerungen, die erforderlich sind, um zumindestens eine der Viehlzahl von Farben zu erzeugen, und

Kombination der Kathodenansteuererregungen der ersten und zweiten Datenbasen zur Lieferung einer einzigen Kathodenansteuermodulation, die die Kathodenansteuerung korrigiert für Helligkeits- und Farbgleichlauf darstellt, die dem Emissionscharakter jedes Farb-Strahlsystem-Phosphors und der ausgewählten Farbe und der Anzeige-Streibbetriebsart entspricht.

## Revendications

1. Appareil de commande de luminosité et de concordance dans la sélection des couleurs pour un système de visualisation à tube cathodique en couleurs qui peut être observé dans une plage étendue de conditions de lumière ambiante, l'appareil comprenant un tube cathodique en couleurs (20) qui fonctionne sous la dépendance d'ordres de couleurs vidéo et qui comporte un écran de visualisation destiné à présenter des images en plusieurs couleurs différentes, en fonction de l'excitation indépendante et variable de cathodes de canons de couleurs respectives, pour produire au moins deux couleurs primaires indépendantes dont la luminosité relative détermine chaque couleur de l'ensemble de couleurs, caractérisé en ce qu'il comprend en outre des moyens de commande de luminosité de visualisation de référence (27) destinés à produire un signal pratiquement indépendant des ordres de couleurs vidéo, pour fixer des niveaux d'excitation de luminosité variables sur une plage de niveaux de luminosité désirés, des moyens (31, 32, 33) qui fonctionnent sous la dépendance d'un signal commun provenant des moyens de commande de luminosité de visualisation de référence (27), de façon à produire un signal de commande de luminosité correspondant à chacune des caractéristiques d'émission de couleurs primaires des cathodes de canons de couleurs respectives, sur la plage de luminosité, des ordres de couleurs vidéo (28, 29) qui réagissent à des signaux d'ordres de couleurs aléatoires de façon à produire uu moins une image à visualiser à un rythme de fréquence vidéo, dans au moins une couleur prédéterminée qui est constituée par des composantes des deux couleurs primaires, avec des niveaux de luminosité relatifs prédéterminés, l'ordre de couleur vidéo travaillant à la fréquence vidéo et les moyens destinés à produire un signal de commande de luminosité travaillant à une fréquence notablement inférieure à la fréquence vidéo, et des moyens de combinaison (24, 25, 26) qui fonctionnent sous la dépendance des ordres de couleurs vidéo (28, 29) et du signal de commande de luminosité, de façon à exciter les cathodes, pour produire ainsi l'image en couleurs prédéterminée avec le niveau de luminosité de référence.

2. Appareil selon la revendication 1, caractérisé en ce que les moyens (31, 32, 33) destinés à produire des signaux de commande de luminosité comprennent des moyens analogiques (50) pour convertir l'excitation de luminosité de visualisation de référence des moyens de commande de luminosité (27) d'une valeur décimale en un signal logarithmique équivalent, pour convertir le signal logarithmique pour la luminosité et la concordance des couleurs, par combinaison linéaire de valeurs logarithmiques, et pour convertir le signal logarithmique converti en une valeur décimale équivalente représentant le signal d'excitation de cathodes qui correspond à chacune des caractéristiques d'émission de couleurs primaires, sur la plage de luminosité, pour chaque canon de couleur d'un tube cathodique donné, et des premiers moyens amplificateurs linéaires (51, 52, 53) pour normaliser l'excitation de cathodes qui est issue des premiers moyens amplificateurs linéaires; et en ce que les moyens qui fonctionnent sous la dépendance des ordres de couleurs vidéo (28, 29) comprennent des moyens (35) pour commander le gain du second amplificateur linéaire (54) conformément à l'excitation de cathode indépendante qui est nécessaire pour produire chacune des couleurs prédéterminées pour au moins une image.

3. Appareil selon la revendication 2, caractérisé en ce que les moyens analogiques pour la conversion pour la luminosité et la concordance des couleurs comprennent en outre un amplificateur logarithmique (50), un amplificateur linéaire (51, 52, 53) avec un gain proportionnel à $2/\gamma$, et un amplificateur anti-logarithmique (54), en désignant par $\gamma$ un facteur constant qui représente la manière selon laquelle lintensité lumineuse d'un luminophore de canon de couleur varie conformément à l'excitation de cathode.

4. Appareil selon la revendication, caractérisé en ce qu'il comprend en outre des moyens (70) qui fonctionnent sous la dépendance du signal de luminosité de visualisation de référence provenant des moyens de commande de luminosité (27) pour effectuer une conversion d'un signal analogique en une forme numérique équivalente, en ce que les premiers moyens de mémoire (72, 73, 74) fonctionnent sous la dépendance du signal de luminosité de référence de façon à enregistrer sous forme numérique la relation fonctionnelle $V = KV_{br}^{2/\gamma}$, représentant les données d'excitation de cathode qui sont nécessaires pour produire la luminosité de la composante de couleur primaire sur la plage de liminosité de visualisation, dans au moins un canon de couleur, conformément aux caractéristiques d'émission du luminophore et aux caractéristiques de concordance des couleurs du canon de couleur, avec les notations suivantes:

V=signal de référence de luminosité corrigé pour tenir compte des caractéristiques du luminophore et de la concordance des couleurs,

$V_{br}$=niveau de luminosité de visualisation de référence non corrigé,

K=constante de gain de normalisation,

$\gamma$=facteur qui caractérise l'intensité lumineuse, d'un luminophore de canon de couleur, des moyens (71) pour obtenir les données d'excitation de cathode, sous forme numérique, à partir des moyens de mémoire, des moyens (75) qui fonctionnant sous la dépendance des données d'excitation de cathode numériques, pour effectuer une conversion de la forme numérique à la forme analogique, des premiers moyens amplificateurs linéaires (83) pour normaliser, conformément à un facteur de gain prédéterminé, la forme analogique des données d'excitation de cathode, et des seconds moyens amplificateurs linéaires (81), qui fonctionnent sous la dépendance des données d'excitation de cathode normalisées qui proviennent des premiers moyens amplificateurs linéaires, et en ce que les moyens de combinaison qui fonctionnent sous la dépendance des ordres de couleurs vidéo comprennent des moyens (35) pour commander le gain du second amplificateur linéaire conformément à l'excitation de cathode indépendante qui est nécessaire pour produire chacune des couleurs prédéterminées pour au moins une image.

5. Appareil selon la revenidcation 3 ou 4, caractérisé en ce que les seconds moyens amplificateurs linéaires comprennent des moyens amplificateurs à transistors (86) ayant un collecteur et un émetteur et ils comportent des moyens de polarisation en tension pour le collecteur et l'émetteur, les moyens de polarisation de collecteur étant également connectés aux cathodes, et des moyens pour faire varier la polarisation d'émetteur avec au moins une résistance de sélection de gain (88) ayant une extrémité connectée à l'émetteur, la résistance ayant une extrémité opposée qui est connectée de façon à recevoir les ordres de couleurs vidéo (28, 29) et à réagir à ces derniers, et le second amplificateur linéaire ayant un gain qui est inversement proportionnel à la valeur de la résistance de sélection de gain.

6. Appareil selon l'une quelconque des revendications précédentes, caractérisé en ce que les signaux de commande de luminosité sont calculés de façon à corriger la réponse de luminosité non linéaire d'un luminophore et la concordance des couleurs, et ils sont exprimés sous forme fonctionnelle par un coefficient de gain ayant un exposant qui est constitué par le quotient $2/\gamma$, le facteur $\gamma$ caractérisant la luminosité absolue d'un canon de couleur en fonction de l'excitation de cathode.

7. Appareil selon la revendication 5, caractérisé en ce qu'il comprend en outre des seconds moyens de mémoire (79) qui fonctionnent sous la dépendance des ordres de couleurs vidéo (28, 29), de façon à enregistrer sous forme numérique des données d'excitation de cathode supplémentaires, représentant les valeurs prédéterminées de chacune des composantes de couleurs primaires pour au moins une image en couleur, et des moyens pour obtenir les données d'excitation de cathode, sous forme numérique, à partir des premiers, et seconds moyens de mémoire (72, 73, 74; 79).

8. Appareil selon la revendication 5 ou 7, caractérisé en ce que les premiers moyens de mémoire (72, 73, 74) comprennent au moins une mémoire morte programmable avec $m$ positions adressables, correspondant à un ensemble respectif de réglages de commande de luminosité de canons de couleurs d'un tube cathodique, chacune de ces portions contenant un nombre $n$ qui caractérise un facteur parmi un ensemble de facteurs de correction de luminosité et de concordance des couleurs, ce nombre étant caractérisé par la relation

$$n=km^{2/\gamma}$$

dans laquelle

k=constante de proportionnalité

$\gamma$=constante qui caractérise l'intensité lumineuse d'un luminophore de couleur.

9. Appareil selon l'une quelconque des revendications précédentes, caractérisé en ce que les ordres vidéo (28, 29) commandent une couleur prédéterminée pour l'une au moins de deux images, à savoir une image écrite en balayage cavalier et une image écrite en balayage par trame.

10. Un procédé de correction de la luminosité et de la concordance des couleurs des luminophores pour un instrument de visualisation à tube cathodique en couleurs, caractérisé en ce qu'il comprend les opérations suivantes:

on applique un signal de modulation d'ordres de couleurs à une cadence correspondant à la fréquence vidéo,

on applique un signal de modulation de luminosité et de concordance des couleurs à une cadence notablement inférieure à celle qui correspond à la fréquence vidéo,

on produit un signal d'attaque de référence de luminosité conformément à un niveau de luminosité d'observation désiré,

on corrige le signal de référence avec un facteur de gain représentant la manière selon laquelle l'intensité lumineuse d'un luminophore de canon de couleur varie en fonction de l'excitation de cathode nécessiare, pour la correction de luminosité et la concordance des couleurs, et avec la luminosité relative prédéterminée des composantes de couleurs primaires qui déterminant un ensemble de couleurs, pour obtenir le signal de modulation de luminosité et de concordance des couleurs,

on applique le signal corrigé à un amplificateur à gain variable, et

on applique le signal vidéo d'ordres de couleurs à l'amplificateur à gain variable, grâce à quoi le signal de sortie de l'amplificateur à gain variable remplit une fonction de concordance des couleurs et de correction de luminosité pour l'excitation de cathode correspondant au niveau de luminosité d'observation, aux caractéristiques d'émission du luminophore de canon de couleur, et à la couleur et au mode d'écriture de visualisation qui sont sélectionnés.

11. Un procédé selon la revendication 10, caractérisé en ce qu'on obtient le facteur de gain en

enregistrant une première base de données qui contient un ensemble d'excitations d'attaque de cathode nécessaires pour produire un ensemble correspondant de luminosités pour chacune des émissions de couleurs primaires de chaque canon de couleur d'un tube cathodique, pour corriger la réponse de luminosité des luminophores, la base de données correspondant en outre au signal d'attaque de référence de luminosité corrigé pour la concordance des couleurs, et

en appliquant à l'amplificateur à gain variable l'une au moins des excitations de l'ensemble d'excitations d'attaque de cathode.

12. Un procédé selon la revendication 11, caractérisé en ce qu'il comprend les opérations supplémentaires suivantes:

on enregistre une seconde base de données comprenant un ensemble d'excitations d'attaque de cathode correspondant aux luminosités relatives prédéterminées des composantes de couleurs primaires qui déterminent un ensemble de couleurs dans l'instrument de visualisation à tube cathodique, ces couleurs étant déterminées sous la dépendance du signal vidéo d'ordres de couleurs,

on applique le signal vidéo d'ordres de couleurs à la seconde base de données pour déterminer les excitations de cathode qui sont nécessaires pour produire l'une au moins des couleurs de l'ensemble de couleurs, et

on combine les excitations d'attaque de cathode des première et seconde bases de données pour produire une seule modulation d'attaque de cathode représentant l'excitation de cathode corrigée en ce qui concerne la luminosité et la concordance des couleurs, en correspondance avec les caractéristiques d'émission de chaque luminophore de canon de couleur et avec la couleur et le mode d'écriture de visualisation sélectionnés.

FIG.1.

FIG.2a.

FIG.2b.

FIG.3.

FIG.4.

| ANALOG COLOR SELECTION RESISTOR VALUES | | | | | | | |
|---|---|---|---|---|---|---|---|
| BINARY COLOR CODE | OUTPUT LINE | RED VIDEO AMPLIFIER | | GREEN VIDEO AMPLIFIER | | BLUE VIDEO AMPLIFIER | |
| | | R (OHMS) | $A_{r2}=1K\Omega/R$ | R (OHMS) | $A_{g2}=1K\Omega/R$ | R (OHMS) | $A_{b2}=1K\Omega/R$ |
| 0001 Red | (a) | 95.3 | 10.49 | – | – | – | – |
| 0010 Orange | (b) | 102 | 9.804 | 165 | 6.061 | – | – |
| 0011 Yellow | (c) | 118 | 8.475 | 124 | 8.065 | 324 | 3.086 |
| 0100 Green | (d) | – | – | 121 | 8.264 | – | – |
| 0101 Blue | (e) | – | – | – | – | 95.3 | 10.49 |
| 0110 Magenta | (f) | 102 | 9.804 | – | – | 169 | 5.914 |
| 0111 White | (g) | 143 | 6.993 | 127 | 7.874 | 162 | 6.173 |
| 1000 Sky Blue | (h) | – | – | 174 | 5.747 | 174 | 5.747 |
| 1001 Brown | (i) | 169 | 5.914 | 267 | 3.745 | 499 | 2.004 |
| 1100 Green | (j) | – | – | 121 | 8.264 | – | – |
| 1101 Yellow | (k) | 102 | 9.804 | 121 | 8.264 | – | – |
| 1110 Red | (m) | 95.3 | 10.49 | – | – | – | – |

OXXX Colors are stroke display
1XXX Colors are raster display

FIG.5

FIG.6a.

EP 0 108 471 B1

FIG.6b.

RED GAIN

GREEN GAIN

BLUE GAIN

RED CATHODE

GREEN CATHODE

BLUE CATHODE

7

| SAMPLE MEMORY DATA FOR BRIGHTNESS AND COLOR TRACKING CORRECTION | |
|---|---|
| Input address to prom (decimal) m | Output data from prom (decimal) n |
| 0 | 0 |
| 1 | 3 (2.518) |
| 2 | 4 (4.487) |
| 3 | 6 (6.291) |
| 4 | 8 |
| 5 | 10 |
| 6 | 11 |
| 7 | 13 |
| 8 | 14 |
| 9 | 16 |
| 10 | 17 |
| 11 | 19 |
| 12 | 20 |
| 13 | 21 |
| 14 | 23 |
| 15 | 24 |
| 16 | 25 |
| . | . |
| . | . |
| . | . |
| . | . |
| 125 | 141 |
| 126 | 142 |
| 127 | 143 |
| 128 | 144 |
| . | . |
| . | . |
| . | . |
| . | . |
| 250 | 251 |
| 251 | 252 |
| 252 | 253 |
| 253 | 253 |
| 254 | 254 |
| 255 | 255 |

FIG.7.

| PROM COLOR CODE FOR DIGITAL COLOR SELECT | | | | | | | |
|---|---|---|---|---|---|---|---|
| Color Code | | Red Prom | | Green Prom | | Blue Prom | |
| Video | CB3–CB0 | c | $A_{r2}=.031c$ | c | $A_{g2}=.031c$ | c | $A_{b2}=.031c$ |
| 0 | 0000 off | 0 | 0 | 0 | 0 | 0 | 0 |
| 0 | 0001 off | 0 | 0 | 0 | 0 | 0 | 0 |
| 0 | 0010 off | 0 | 0 | 0 | 0 | 0 | 0 |
| 0 | 0011 off | 0 | 0 | 0 | 0 | 0 | 0 |
| 0 | 0100 off | 0 | 0 | 0 | 0 | 0 | 0 |
| 0 | 0101 off | 0 | 0 | 0 | 0 | 0 | 0 |
| 0 | 0110 off | 0 | 0 | 0 | 0 | 0 | 0 |
| 0 | 0111 off | 0 | 0 | 0 | 0 | 0 | 0 |
| 0 | 1000 off | 0 | 0 | 0 | 0 | 0 | 0 |
| 0 | 1001 off | 0 | 0 | 0 | 0 | 0 | 0 |
| 0 | 1010 off | 0 | 0 | 0 | 0 | 0 | 0 |
| 0 | 1011 off | 0 | 0 | 0 | 0 | 0 | 0 |
| 0 | 1100 off | 0 | 0 | 0 | 0 | 0 | 0 |
| 0 | 1101 off | 0 | 0 | 0 | 0 | 0 | 0 |
| 0 | 1110 off | 0 | 0 | 0 | 0 | 0 | 0 |
| 0 | 1111 off | 0 | 0 | 0 | 0 | 0 | 0 |
| 1 | 0000 black/ off | 0 | 0 | 0 | 0 | 0 | 0 |
| 1 | 0001 red | 255 | 7.843 | 0 | 0 | 0 | 0 |
| 1 | 0010 orange | 237 | 7.289 | 187 | 5.752 | 0 | 0 |
| 1 | 0011 yellow | 204 | 6.274 | 247 | 7.597 | 0 | 0 |
| 1 | 0100 green | 0 | 0 | 255 | 7.843 | 0 | 0 |
| 1 | 0101 blue | 0 | 0 | 214 | 6.582 | 173 | 5.321 |
| 1 | 0110 magenta | 239 | 7.351 | 0 | 0 | 145 | 4.459 |
| 1 | 0111 white | 169 | 5.198 | 241 | 7.413 | 150 | 4.614 |
| 1 | 1000 sky blue | 0 | 0 | 214 | 6.582 | 173 | 5.32 |
| 1 | 1001 brown | 175 | 5.383 | 141 | 4.337 | 60 | 1.845 |
| 1 | 1010 purple | 202 | 6.213 | 0 | 0 | 193 | 5.936 |
| 1 | 1011 off | 0 | 0 | 0 | 0 | 0 | 0 |
| 1 | 1100 green | 0 | 0 | 255 | 7.843 | 0 | 0 |
| 1 | 1101 yellow | 240 | 7.382 | 255 | 7.843 | 0 | 0 |
| 1 | 1110 red | 255 | 7.843 | 0 | 0 | 0 | 0 |
| 1 | 1111 black/ off | 0 | 0 | 0 | 0 | 0 | 0 |

# FIG.8.

FIG.9.

FIG.1O.

EP 0 108 471 B1

FIG.11a.

11

FIG.11b.

| HYBRID, COLOR SELECTION RESISTOR VALUES | | | |
|---|---|---|---|
| BINARY COLOR CODE | RED VID. AMP. (OHMS) | GREEN VID. AMP. (OHMS) | BLUE VID. AMP. (OHMS) |
| 0001 Red | 590 | – | – |
| 0010 Orange | 681 | 1K | – |
| 0011 Yellow | 866 | 634 | 3.24K |
| 0100 Green | – | 390 | – |
| 0101 Blue | – | 768 | 1.13K |
| 0110 Magenta | 681 | – | 1.43K |
| 0111 White | 1.18K | 649 | 1.37K |
| 1000 Sky Blue | – | 1.07K | 1.50K |
| 1001 Brown | 1.43K | 1.91K | 5.28K |
| 1100 Green | – | 590 | – |
| 1101 Yellow | 681 | 590 | – |
| 1110 Red | 590 | – | – |

OXXX Colors are stroke display
1XXX Colors are raster display

FIG.12.

EP 0 108 471 B1